# EUROPEAN PATENT SPECIFICATION

(11) **EP 1 310 542 B1**
(45) Date of publication and mention of the grant of the patent: **18.04.2007**
(21) Application number: 02023247.6
(22) Date of filing: 17.10.2002
(51) Int. Cl.: C09K 19/30, C09K 19/44

(54) **Liquid crystalline compound, medium and display**
Flüssigkristalline Verbindung, flüssigkristallines Medium und Flüssigkristallanzeige
Composé liquide cristallin, milieu liquide cristallin et dispositif d'affichage à cristaux liquides

(30) Priority: 07.11.2001 EP 01126409
(43) Date of publication of application: 14.05.2003
(73) Proprietor: Merck Patent GmbH, 64293 Darmstadt (DE)
(72) Inventor: Manabe, Atsutaka, 64625 Bensheim (DE); Bremer, Matthias, Dr., 64295 Darmstadt (DE)

(56) References cited:
- EP-A- 0 439 089
- EP-A- 0 718 264
- WO-A-01/12751
- WO-A-91/13850
- WO-A-92/02597
- DE-A- 19 528 085
- DE-A- 19 919 348
- PATENT ABSTRACTS OF JAPAN vol. 1997, no. 06, 30 June 1997 (1997-06-30) -& JP 09 030996 A (DAINIPPON INK &CHEM INC), 4 February 1997 (1997-02-04)

## Description

The invention relates to a liquid crystalline compound, especially suitable as a component of a liquid crystalline medium with positive dielectric anisotropy and high optical anisotropy. Furthermore, the invention also relates to such a liquid crystalline medium and its use in electrooptical displays and projection systems, in particular reflective displays, LCoS™ displays and displays based on a birefringence effect, such as OCB displays.

Displays of the OCB (optically compensated bend) are based on a birefringence effect and comprise a liquid crystal layer with a bend structure. The bend cell, also known as pi-cell, was first proposed by P. Bos et al., SID 83 Digest, 30 (1983) for an electrically controllable half-wave plate, whereas the OCB mode for displays was described by Y. Yamaguchi, T. Miyashita and T. Uchida, SID 93 Digest, 277 (1993), followed by papers of T. Miyashita et al. in, inter alia, Proc. Eurodisplay, 149 (1993), J.Appl.Phys. 34, L177 (1995), SID 95 Digest, 797 (1995), and C.-L. Kuo et al., SID 94 Digest, 927 (1994). An OCB cell comprises a liquid crystal cell with bend alignment and a liquid crystal medium with positive Δε. Furthermore, OCB displays as reported in the above papers comprise one or more birefringent optical retardation films to eliminate light leakage by the bend cell in the black state. OCB displays bear several advantages like for example a wider viewing angle and shorter switching times than conventional displays based on twisted nematic (TN) cells.

The above mentioned papers have shown that liquid-crystalline phases must have high values for the optical anisotropy Δn and a relatively high positive value for the dielectric anisotropy Δε, and preferably should have rather low values for the ratio between the elastic constants K₃₃/K₁₁ and for the viscosity, in order to be usable for high-information display elements based on the OCB effect. The industrial application of the OCB effect in electro-optical display elements requires LC phases which must satisfy a multiplicity of requirements. Particularly important here are chemical resistance to moisture, air and physical effects such as heat, radiation in the infra-red, visible and ultra-violet regions and direct and alternating electrical fields. Furthermore, LC phases which can be used industrially need a liquid-crystalline mesophase in a suitable temperature range, a relatively high birefringence, a positive dielectric anisotropy and a low viscosity.

LCoS^{™} (Liquid Crystal on Silicon) displays are known in prior art and are available from Three-Five Systems Inc. (Tempe, Arizona, USA). LCoS^{™} microdisplays are reflective displays that typically comprise a liquid crystal layer with twisted nematic structure sandwiched by a silicon backplane and a cover glass. The silicon backplane is an array of pixels, each of which has a mirrored surface which is at the same time a conductor. Each pixel comprises a stationary mirror covered by an active liquid crystal layer with twisted nematic orientation that can be switched into homeotropic orientation by application of a voltage. LCoS^{™} microdisplays are small with a diagonal of typically less than 1.0", however, they enable high resolution from 1/4 VGA (78 thousand pixels) to UXGA+ (over 2 million pixels).

Due to the small pixel size LCoS^{™} displays also have a very thin cell thickness, which is typically about 1 micron. Therefore, liquid-crystalline phases used in these displays must in particular have high values for the optical anisotropy Δn, in contrast to conventional reflective type LC displays, which usually require LC phases with low Δn. At the same time, high reliability against UV light is essential due to the backlight system of LCoS^{™} displays and projection displays in general.

None of the series of compounds having a liquid-crystalline mesophase which have been disclosed hitherto includes a single compound which meets all these requirements. Generally, therefore, mixtures of from two to 25, preferably from three to 18, compounds are prepared to give substances which can be used as LC phases. However, ideal phases cannot easily be produced in this way, since liquid-crystal materials having at the same time high birefringence and low viscosity were hitherto not available.

OCB mode and LCoS^{™} displays can be operated as matrix displays. Matrix liquid-crystal displays (MLC displays) are known. Examples of nonlinear elements which can be used to individually switch the individual pixels are active elements (i.e. transistors). This is then referred to as an "active matrix", and a differentiation can be made between two types:
1. MOS (metal oxide semiconductor) transistors on silicon wafers as substrate,
2. Thin-film transistors (TFT) on a glass plate as substrate.

In the case of type 1, the electro-optical effect used is usually dynamic scattering or the guest-host effect. The use of monocrystalline silicon as substrate material restricts the display size, since even the modular assembly of various part-displays results in problems at the joins.

In the case of the more promising type 2, which is preferred, the electro-optical effect used is usually the TN effect. A distinction is made between two technologies: TFTs comprising compound semiconductors, such as, for example, CdSe, or TFTs based on polycrystalline or amorphous silicon. Intensive research efforts are being made worldwide in the latter technology.

The TFT matrix is applied to the inside of one glass plate of the display, while the inside of the other glass plate carries the transparent counterelectrode. Compared with the size of the pixel electrode, the TFT is very small and has virtually no adverse effect on the image. This technology can also be extended to fully colour-compatible image displays, in which a mosaic of red, green and blue filters is arranged in such a manner that each filter element is located opposite a switchable pixel.

The TFT displays disclosed hitherto usually operate as TN cells with crossed polarizers in transmitted light and are illuminated from the back. In case of OCB mode displays, however, reflective displays have also been proposed by T. Uchida, T. Ishinabe and M. Suzuki in SID 96 Digest, 618 (1996).

The term MLC display here covers any matrix display containing integrated nonlinear elements, i.e. in addition to the active matrix, also displays containing passive elements such as varistors or diodes (MIM = metal-insulator-metal).

MLC displays of this type are particularly suitable for TV applications or for high-information displays in automobile or aircraft construction. In addition to problems with respect to the angle dependence of the contrast and the response times, difficulties occur in MLC displays due to inadequate resistivity of the liquid-crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. As the resistivity decreases, the contrast of an MLC display worsens. Since the resistivity of the liquid-crystal mixture generally decreases over the life of an MLC display due to interaction with the internal surfaces of the display, a high (initial) resistance is very important for displays which must have acceptable resistance values over a long operating period. Furthermore MLC displays, especially for outdoor use, are exposed to UV-radiation by the sunlight, a situation similar to the influence of the backlight in projection and LCoS^{™} displays. Compounds of the liquid crystalline medium, especially tolane derivatives, which are used to achieve a high optical anisotropy, may decompose under intensive UV radiation, also leading to a decrease of the resistivity of the medium.

The disadvantage of the MLC-TN displays disclosed hitherto is due to their comparatively low contrast, the relatively high viewing angle dependence and the difficulty of producing grey shades in these displays.

Thus, there continues to be a great demand for MLC displays, in particular projection displays, displays based on a birefringence effect, such as OCB displays, and TFT-displays for outdoor use having very high resistivity at the same time as a wide operating temperature range, short response times and low threshold voltage, with the aid of which various grey shades can be produced. Furthermore, there is a great demand for liquid crystalline media for these kind of displays which exhibit at the same time low viscosities, high birefringence, relatively high positive dielectric anisotropy and a high UV stability.

The invention has a first object to provide a highly polar compound which exhibits a high optical anisotropy, a very high clearing point und UV stability and which is therefore especially suitable as a component of liquid crystalline media in MLC displays.

A second object of the invention is a liquid crystalline medium, which overcomes the above mentioned disadvantages, at least in part, and at the same time has a high optical and dielectrical anisotropy, a high clearing temperature and shows a good UV stability.

Furthermore, the invention has a third object of providing an electrooptical liquid crystal display, in particular an active matrix display, a reflective display and a display of a projection, LCoS^{™} or OCB mode, which do not have the above mentioned disadvantages, or do so only to a reduced extent.

Further objects of the invention are cholesteric liquid crystal media with a high optical anisotropy and with a good UV stability and a cholesteric liquid crystal display.

It has now been found that the first object can be achieved with a
a liquid-crystalline medium based on a mixture of polar compounds of positive dielectric anisotropy, characterized in that it contains one or more compounds of the formula I 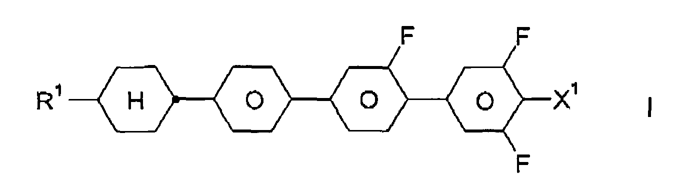 wherein
- X¹: is F, Cl, CHF₂, CF₃, OCHF₂ or OCF₃ and
- R¹: is alkyl with 1 to 20 C atoms
and one or more compounds of the group of formulae IIa, IIb and XVIIa 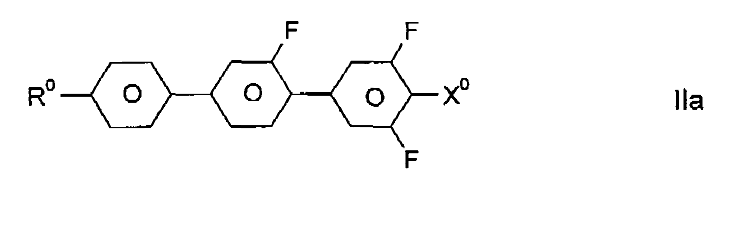 wherein
- R⁰: is alkyl, alkoxy, fluoroalkyl, alkenyl or oxaalkenyl with up to 9 C atoms and
- X⁰: is F, Cl, CF₃, OCF₃, OCHF₂, fluoroalkyl or fluoroalkoxy with up to 7 carbon atoms, 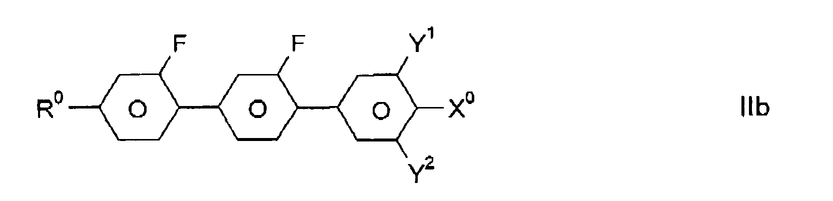
wherein
- R⁰: is alkyl, alkoxy, fluoroalkyl, alkenyl or oxaalkenyl with up to 9 C atoms,
- X⁰: is F, Cl, CF₃, OCF₃, OCHF₂, fluoroalkyl or fluoroalkoxy with up to 7 carbon atoms, and
- Y¹ and Y²: are each independently of one another H or F, 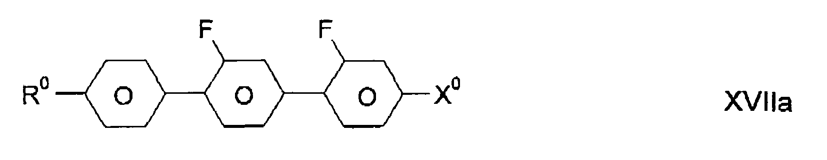
- R⁰: is alkyl, alkoxy, fluoroalkyl, alkenyl or oxaalkenyl with up to 9 C atoms,
- X⁰: is F or Cl.

The compounds of the formula I exhibit
- a high value of the birefringence,
- a very high positive dielectric anisotropy,
- a very high clearing point,
- a low rotational viscosity,
- a good low temperature stability and
- a high UV stability.

Furthermore, it has been found that the second object of the invention can be achieved with a liquid-crystalline medium based on a mixture of polar compounds of positive dielectric anisotropy containing one or more compounds of formula I.

The liquid crystalline medium according to the present invention is characterized in that it exhibits
• a high value of the birefringence,
• a high positive dielectric anisotropy,
• a broad nematic phase range, especially a high clearing temperature,
• a low viscosity, and
• a high UV stability.

Therefore, the inventive liquid crystalline medium is especially suited for electrooptical displays for outdoor usage to allow a high UV radiation and a broad working temperature range, especially up to high temperatures. Furthermore, electrooptical liquid crystal displays with a strong illumination light, like projection displays, e.g. of the LCoS^{™} mode, may benefit from the use of the liquid crystalline medium according to the invention, by a longer lifetime due to the high UV stability. In addition when using the inventive liquid crystal medium in an electrooptical display it is possible to achieve small values of the response time, a low driving voltage, a satisfying grey scale performance, a wide viewing angle and a high contrast.

Cholesteric liquid crystal media comprising as a nematic component a liquid crystal medium according to the present invention and as optically active component one or more chiral dopants are another object of the present invention. The above mentioned advantageous properties of the inventive liquid crystalline medium, especially the high optical birefrigence and good UV stability, are also to the advantage for cholesteric applications. Yet another object of the invention are cholesteric liquid crystal displays, in particular SSCT- and PSCT-displays, comprising a cholesteric liquid crystal medium as described above.

The invention also relates to a liquid crystalline compound of formula Ib as defined below.

Furthermore the invenmtion relates to a liquid-crystalline medium based on a mixture of polar compounds having positive dielectric anisotropy, characterized in that it contains one or more compounds of formula I as defined above and below.

According to the DE 199 19 348 A1, EP 0 439 089 A1 and WO 01/12751 the generic formula I* 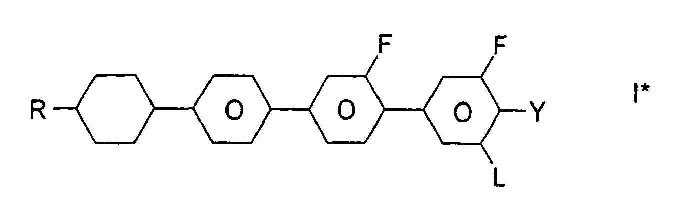 wherein R is H, an alkyl or alkenyl radical having 1 to 15 C-atoms which may substituted and wherein one or more CH₂ groups may be replaced by various groups, L is H or F and Y is F, Cl, halogenated alkyl, alkenyl, alkenyloxy, alkoxyalkyl or alkoxy, is known and compounds of this formula I* are proposed as co-components of liquid crystalline mixtures. But compounds of the formula I according to this invention are not disclosed.

Furthermore, the JP 09-030996 describes fluorinated p-terphenyl derivatives.

In the following preferred derivatives of the compound of the formula I which are also preferred components of the liquid crystalline medium according to the invention are given. Thus, a preferred liquid crystalline medium according to the invention contains one or more of the preferred compounds of the formula I as specified below.

Preferred compounds of formula I are those wherein R¹ is alkyl with 1 to 8 C atoms. Very preferably R¹ is a straight chain alkyl radical and thus R¹ is methyl, ethyl, propyl, butyl, pentyl, hexyl, heptyl or octyl, in particular ethyl, propyl or butyl.

Further preferred compounds of formula I are those wherein X¹ is F, CHF₂, CF₃, OCHF₂ or OCF₃, in particular F, OCHF₂ or OCF₃, most preferably OCHF₂ or OCF₃.

Compounds of the formulae la and/or Ib are very preferred: 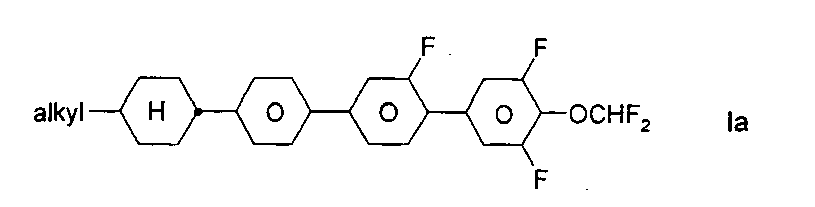 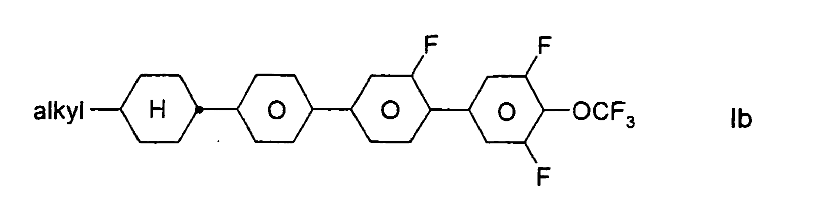 wherein alkyl is an alkyl group with 1 to 8 C atoms.

The compounds of the formula I are prepared using methods known to the person skilled in the art. The following reaction scheme illustrates an advantageous synthesis of the inventive compounds.

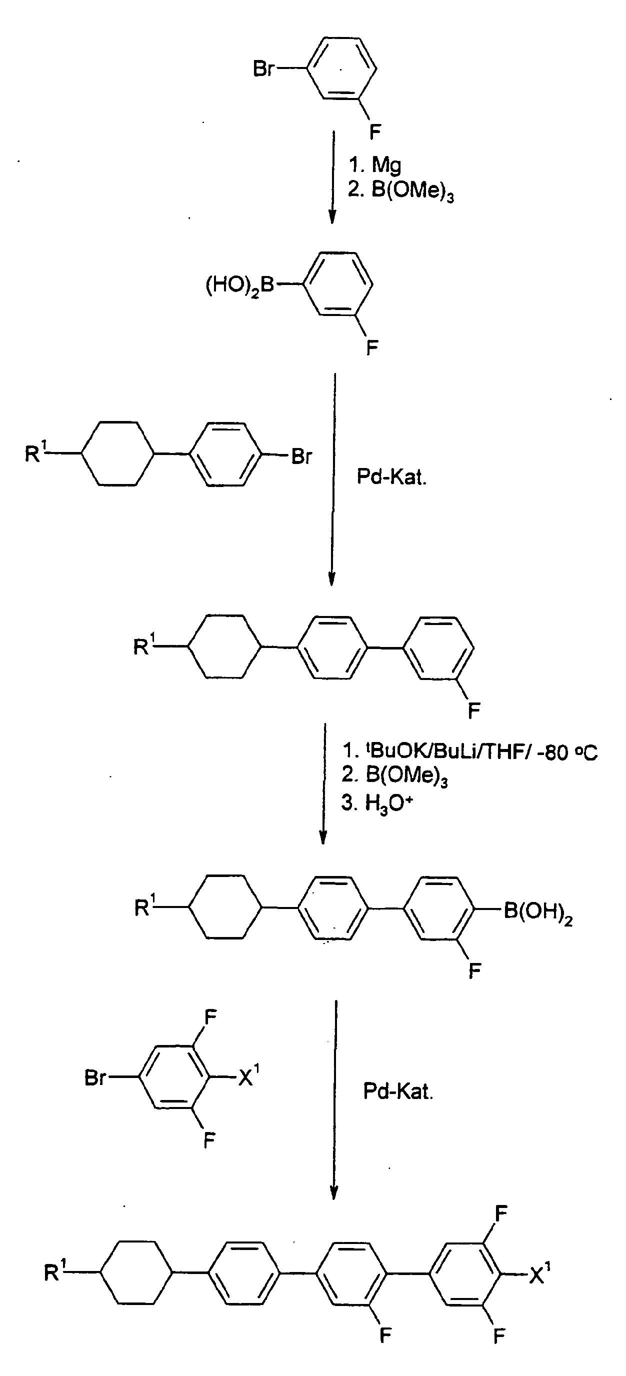

In the following preferred liquid crystalline mixtures according to the invention are specified.

Liquid crystalline mixtures with a high optical anisotropy value Δn ≥ 0.16, especially Δn ≥ 0.17, in particular Δn ≥ 0.18 are preferred. Even optical anisotropy values of Δn ≥ 0.19 can be achieved with inventive mixtures.

The liquid crystalline medium preferably in addition comprises one or more terphenyl compounds of formula IIa 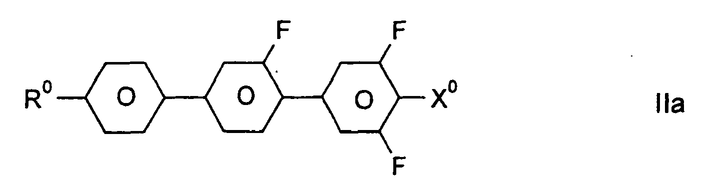 wherein
- R⁰: is alkyl, alkoxy, fluoroalkyl, alkenyl or oxaalkenyl with up to 9 C atoms and
- X⁰: is F, Cl, CF₃, OCF₃, OCHF₂, fluoroalkyl or fluoroalkoxy with up to 7 carbon atoms.

R⁰ is preferably an alkyl group with 1 to 8 C-atoms. Preferred meanings of X⁰ are F, CF₃, OCHF₂ and OCF₃.

Thus, a particularly preferred liquid crystalline medium according to the invention comprises one or more of the derivatives of the formula IIa.1 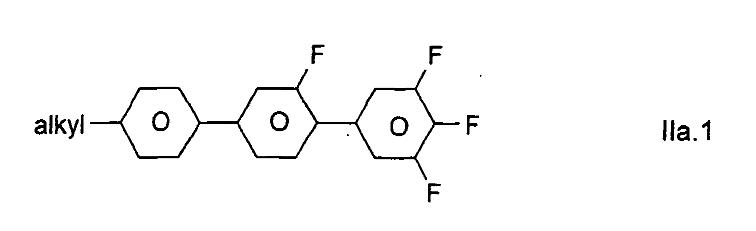 wherein alkyl is an alkyl group with 1 to 8 C-atoms.

Using components of the formula IIa, especially IIa.1, liquid crystal mixtures with a very high dielectrical anisotropy Δε, especially Δε≥ 12.0, and a very high ε_{∥} value (dielectric constant in the parallel direction to the molecular axis) are obtainable.

In addition the liquid crystalline medium preferably comprises one or more terphenyl compounds of formula IIb 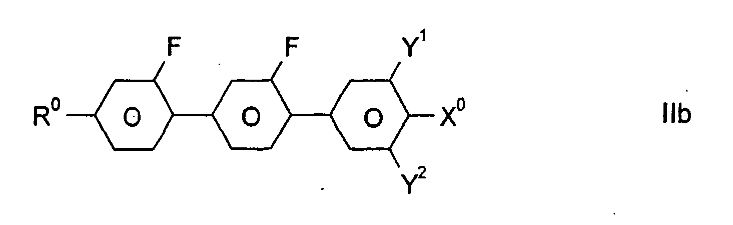 wherein
- R⁰: is alkyl, alkoxy, fluoroalkyl, alkenyl or oxaalkenyl with up to 9 C atoms,
- X⁰: is F, Cl, CF₃, OCF₃, OCHF₂, fluoroalkyl or fluoroalkoxy with up to 7 carbon atoms, and
- Y¹ and Y²: are each independently of one another H or F.

R⁰ is preferably an alkyl group with 1 to 8 C-atoms. X⁰ is very preferably Cl.

Thus, a particularly preferred liquid crystalline medium according to the invention comprises one or more of the derivatives of the formula IIb.1 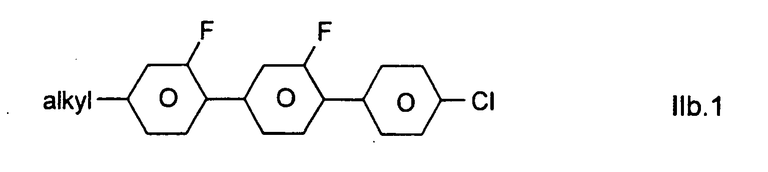 wherein alkyl is an alkyl group with 1 to 8 C-atoms.

Using components of the formula llb, especially IIb.1, liquid crystal mixtures with a very high optical anisotropy Δn, especially Δn ≥ 0.19, are obtainable.

The liquid crystal mixture preferably comprises in addition one or more polar compounds selected from the formulae III to VIII 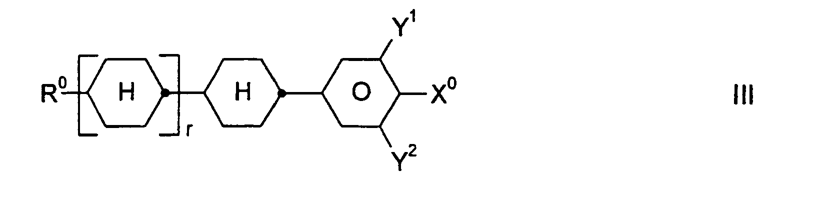 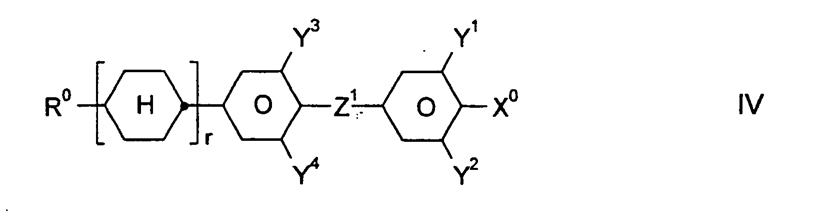 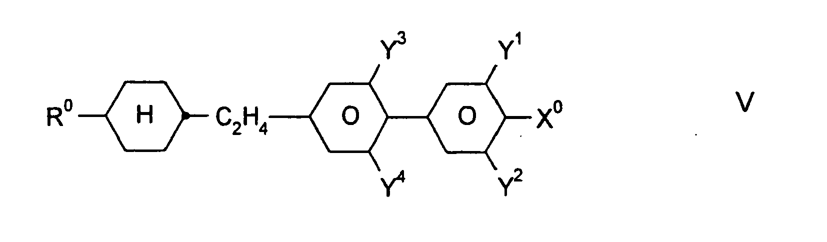 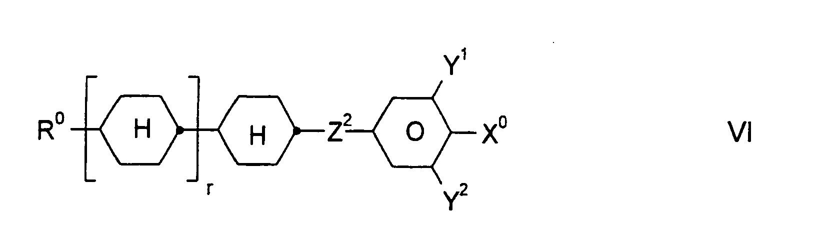 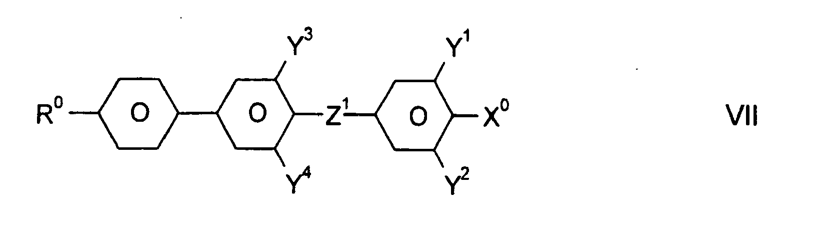 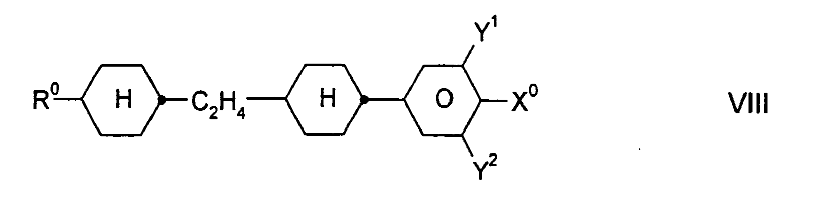 wherein
- R⁰: is alkyl, alkoxy, fluoroalkyl, alkenyl or oxaalkenyl with up to 9 C atoms,
- Z¹: is CF₂O, C₂F₄ or a single bond,
- Z²: is CF₂O, C₂F₄ or C₂H₄,
- X⁰: is F, Cl, CF₃, OCF₃, OCHF₂, fluoroalkyl or fluoroalkoxy with up to 7 carbon atoms,
- Y¹ to Y⁴: are independently of each other H or F, and
- r: is 0 or 1.

The compounds of formula III are preferably selected from the following formulae: 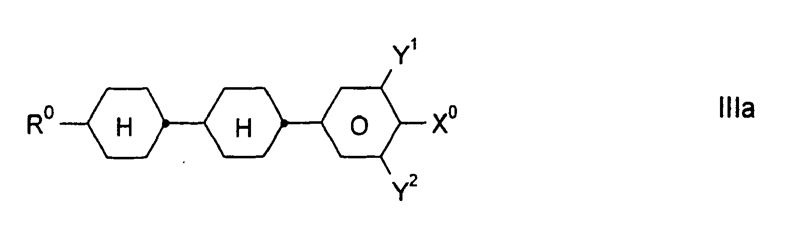 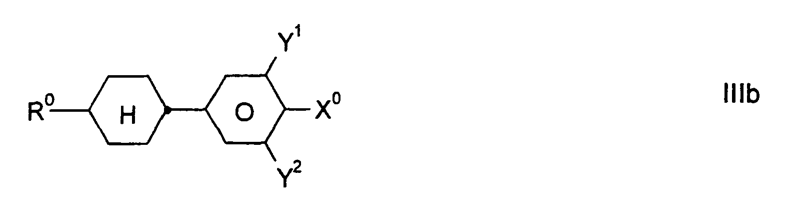 wherein R⁰ and X⁰ have the meanings given above, R⁰ is preferably n-alkyl with 1 to 8 C atoms or alkenyl with 2 to 7 C atoms and X⁰ is preferably F, Cl, CF₃, OCF₃ or OCHF₂, in particular F or OCF₃.

Particularly preferably the liquid crystal mixture comprises one or more compounds of formula IIIa1 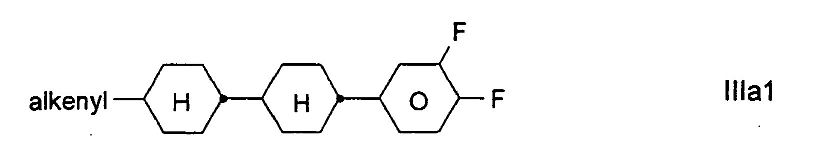 wherein alkenyl is vinyl, 1 E-propenyl, 1 E-butenyl, 3E-butenyl or 3E-pentenyl, in particular 3E-butenyl or 3E-pentenyl, in particular vinyl.

The compounds of formula IV are preferably selected from the following formulae 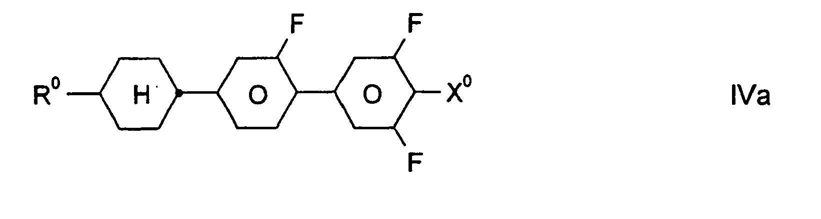 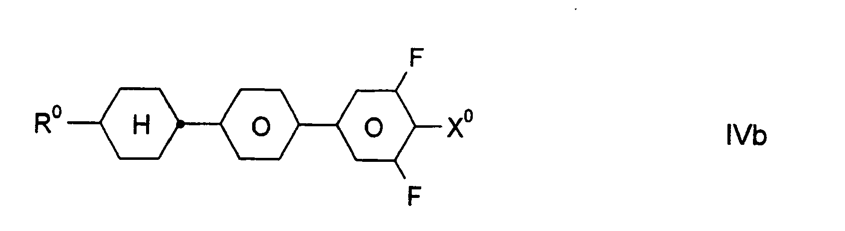 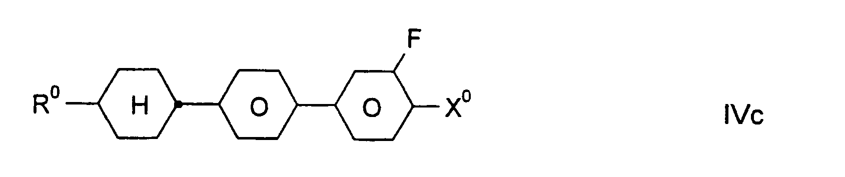 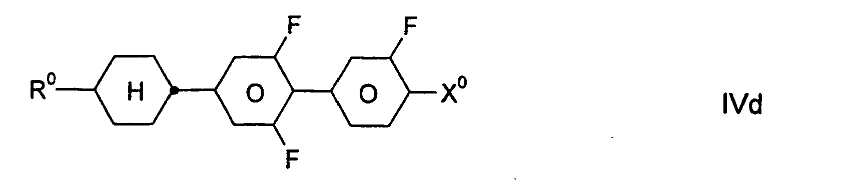 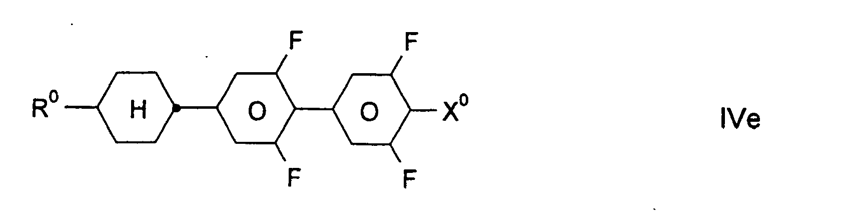 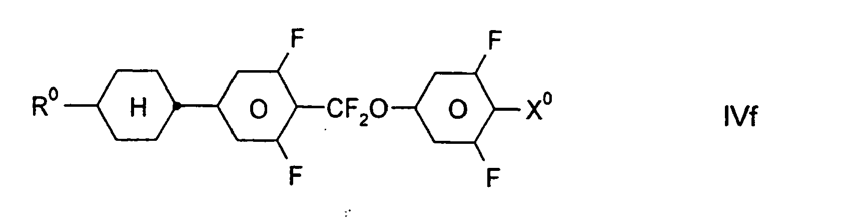 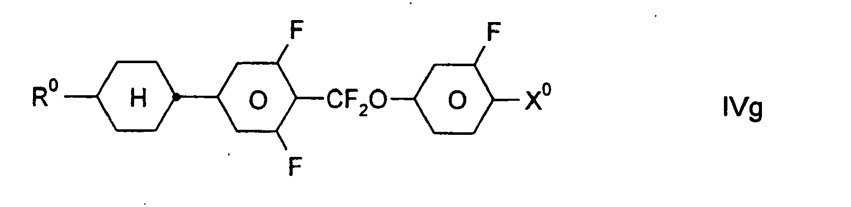 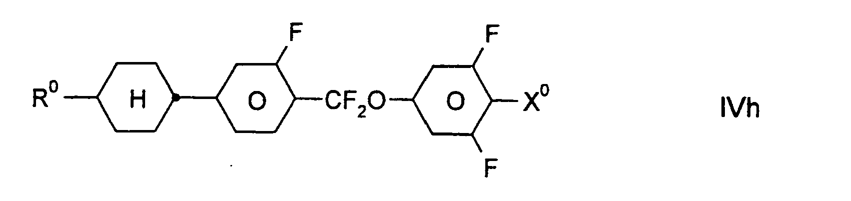 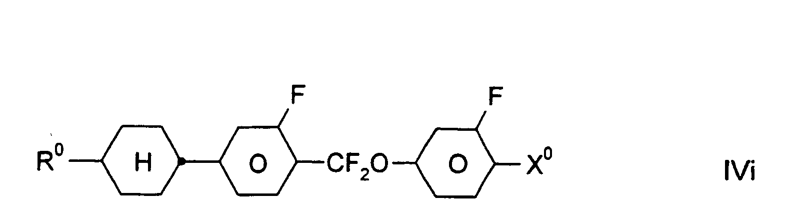 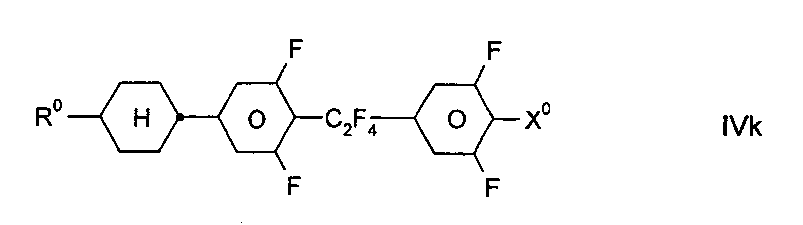 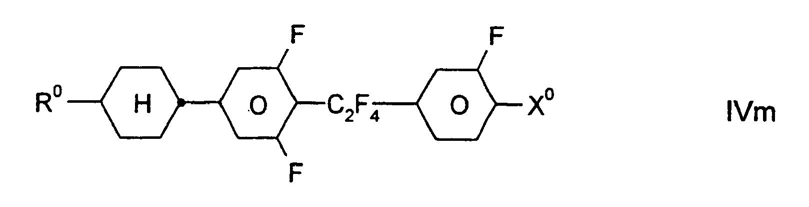 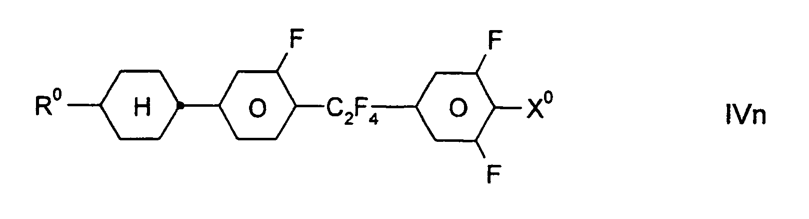 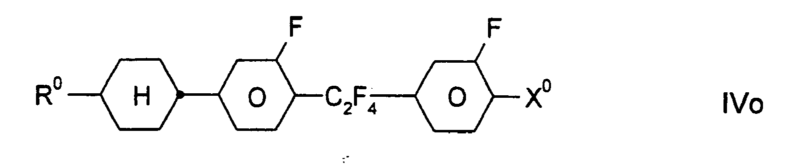 wherein R⁰ and X⁰ have the meanings given above, R⁰ is preferably n-alkyl with 1 to 8 C atoms or alkenyl with 2 to 7 C atoms, and X⁰ is preferably F, Cl, CF₃, OCF₃ or OCHF₂, in particular F or OCF₃.

Particularly preferred are compounds of formula IVa, IVb and IVc, in particular wherein X⁰ is F. Further, compounds of formula IVf are preferred.

The compounds of formula VI are preferably selected from the following formulae 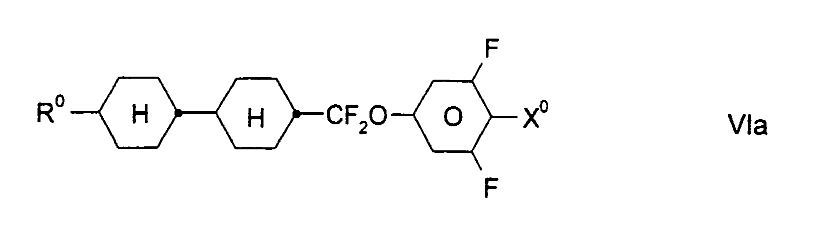 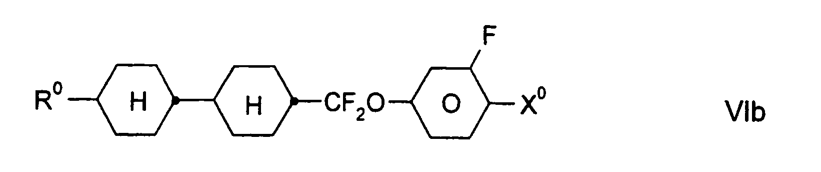 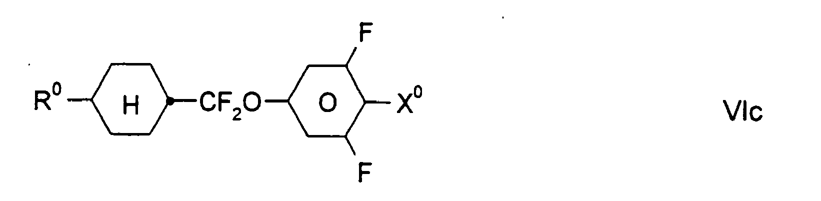 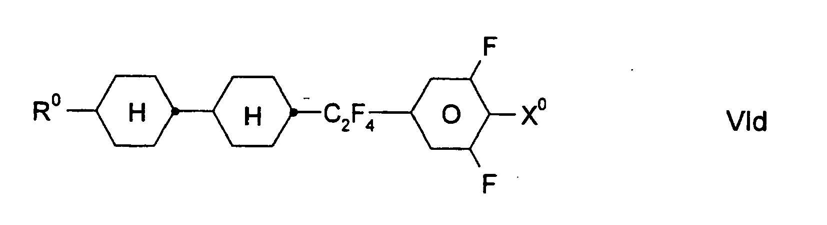 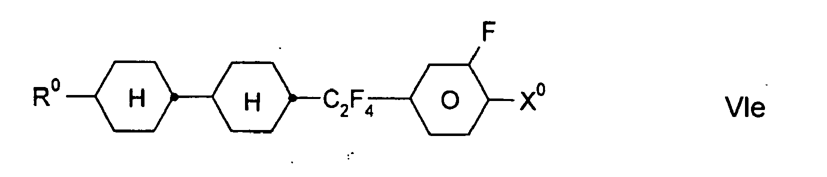 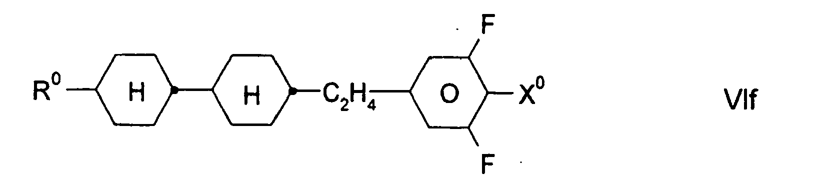 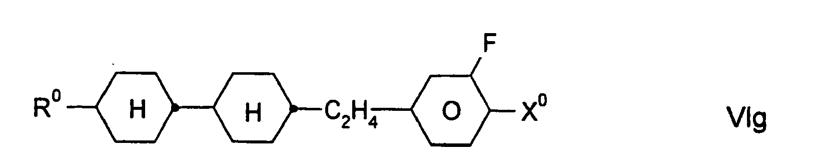 wherein R⁰ and X⁰ have the meanings given above, R⁰ is preferably n-alkyl with 1 to 8 C atoms or alkenyl with 2 to 7 C atoms, and X⁰ is preferably F, Cl, CF₃, OCF₃ or OCHF₂, in particular F or OCF₃.

Particularly preferred are compounds of formula VIa, VIb and Vlc.

The compounds of formula VII are preferably selected from the following formulae 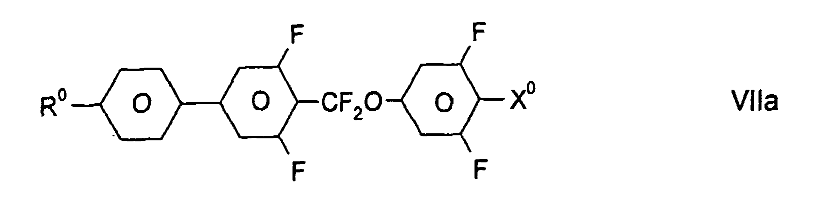 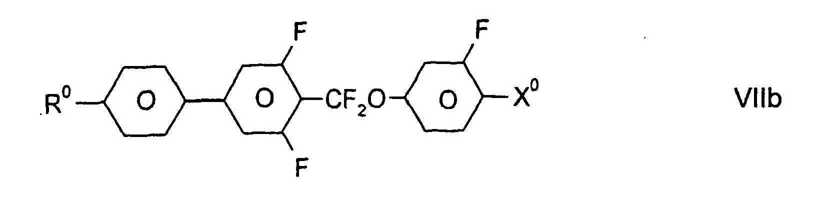 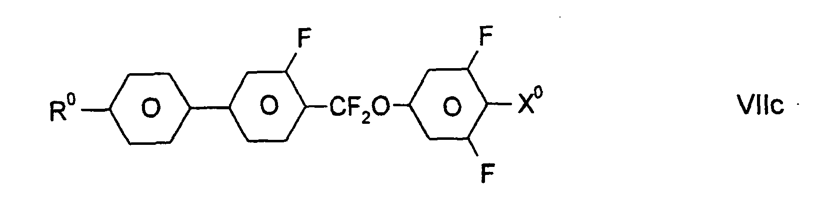 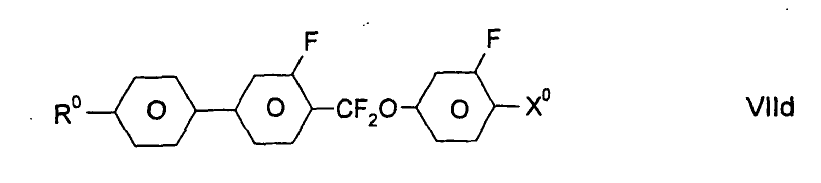 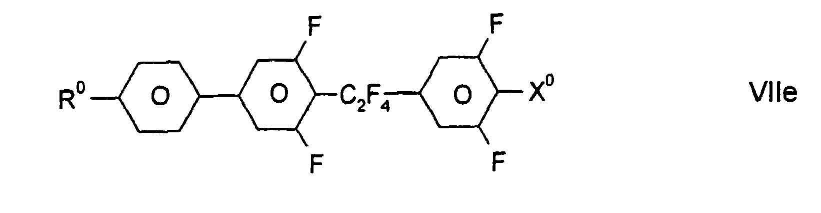 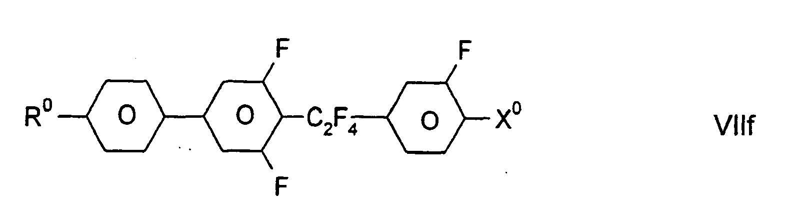 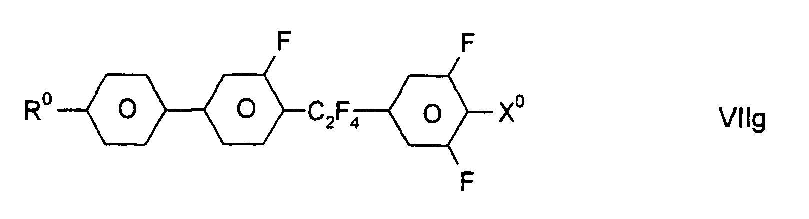 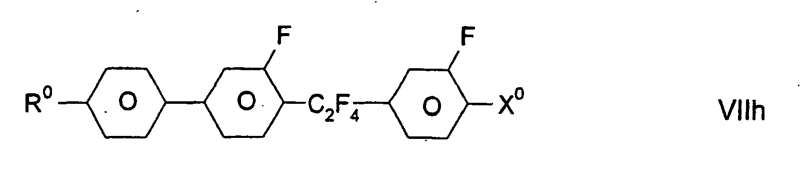 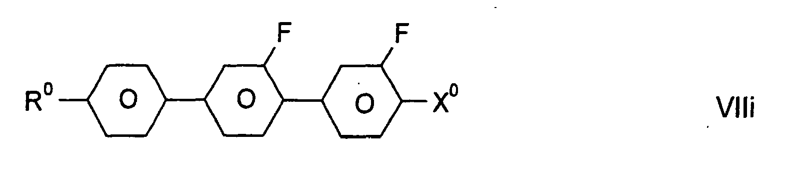 wherein R⁰ and X⁰ have the meanings given above, R⁰ is preferably n-alkyl with 1 to 8 C atoms or alkenyl with 2 to 7 C atoms, and X⁰ is preferably F, Cl, CF₃, OCF₃ or OCHF₂, in particular F or OCF₃.

Particularly preferred are compounds of formula Vlla and Vllb, in particular those wherein X⁰ is F.

The liquid crystal mixture preferably comprises in addition one or more four-ring compounds selected from the formulae IX to XVI. 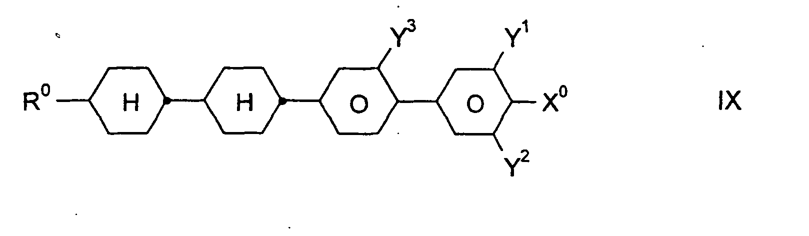 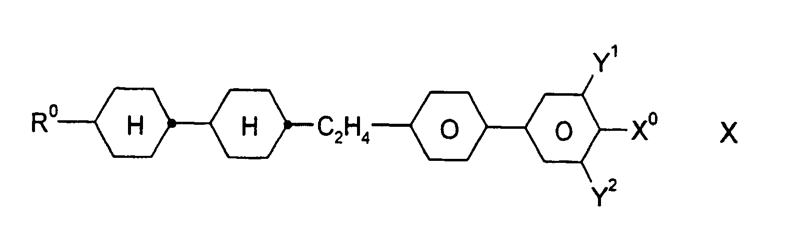 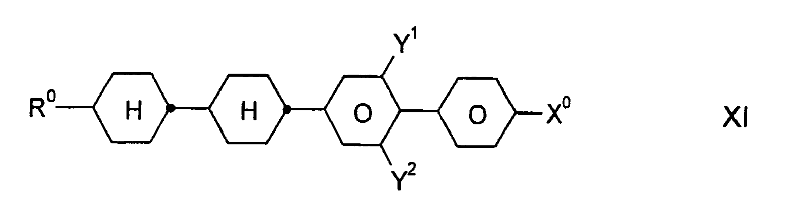 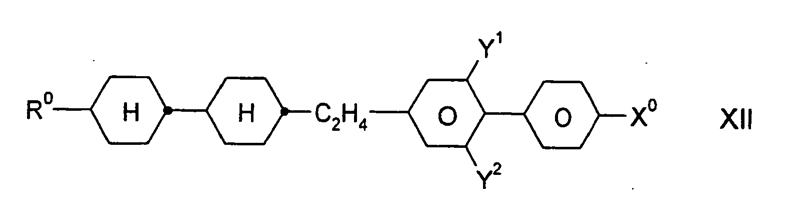 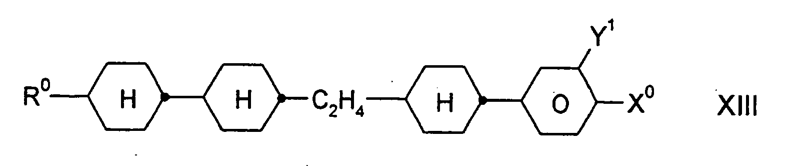 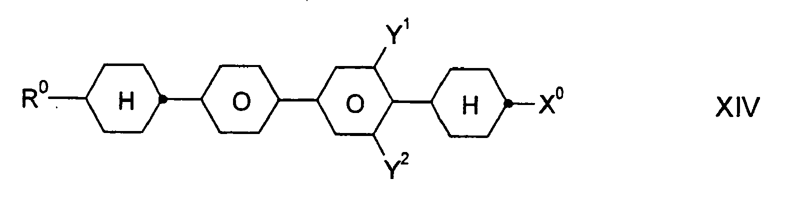 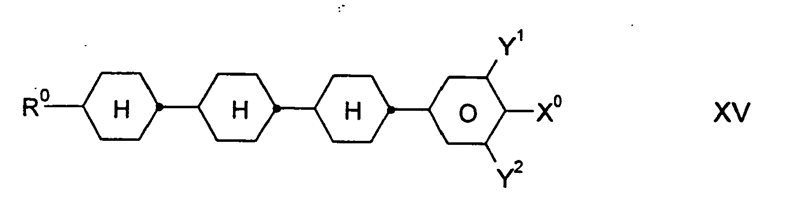 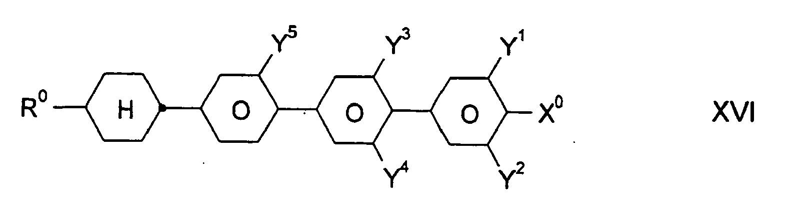 wherein R⁰ and X⁰ have the meanings given above and Y¹, Y², Y³, Y⁴ and Y⁵ are independently of each other H or F with the proviso that regarding formula XVI Y¹, Y² and Y³ are not F and Y⁴ and Y⁵ are not H at the same time. Thus, the formula XVI does not encompass compounds of the formula I. R⁰ is preferably n-alkyl with 1 to 8 C atoms or alkenyl with 2 to 7 C atoms. X⁰ is preferably F, Cl, CF₃, OCF₃ or OCHF₂, in particular F or OCF₃. Y⁴ and Y⁵ are preferably H.

Preferred compounds of the formula IX are those of the formula IXa 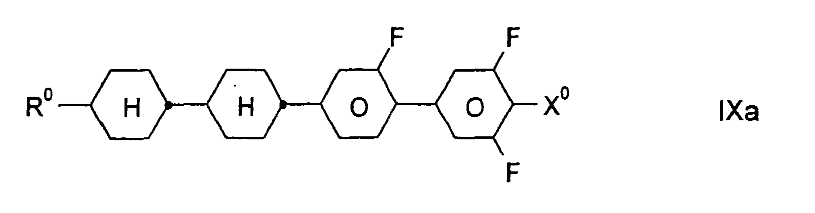 wherein R⁰ and X⁰ have the meanings given above. X⁰ is preferably F, Cl, CF₃, OCF₃ or OCHF₂, in particular F or OCF₃.

The liquid crystal mixture preferably comprises in addition one or more compounds selected from the formulae XVII to XIX. 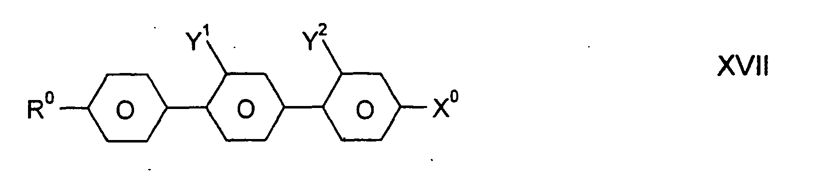 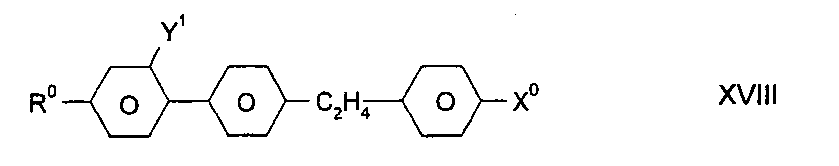 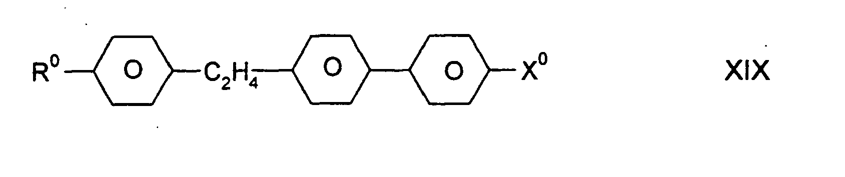 wherein R⁰, Y¹, Y² and X⁰ have the meanings given above, and the phenylene rings are optionally mono- or polysubstituted with F or Cl. Preferably R⁰ is n-alkyl with 1 to 8 C atoms or alkenyl with 2 to 7 C atoms, X⁰ is F, Cl, CF₃, OCF₃ or OCHF₂, in particular F or Cl, and at least one phenylene ring is substituted with F.

Preferred compounds of formula XVII are those of formula XVIIa 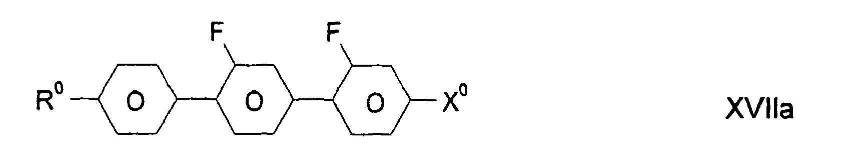 wherein X⁰ is F or Cl, in particular F.

Preferred compounds of formula XVIII are those wherein Y¹ is F and X⁰ is F or Cl, in particular F.

The liquid crystal mixture preferably comprises in addition one or more compounds selected from the formulae XX to XXIII. 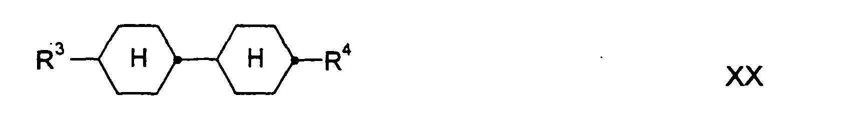 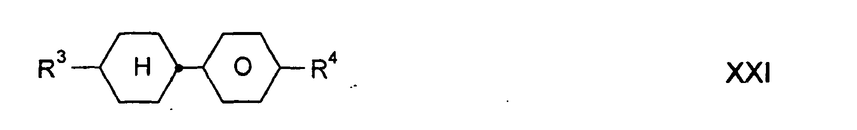 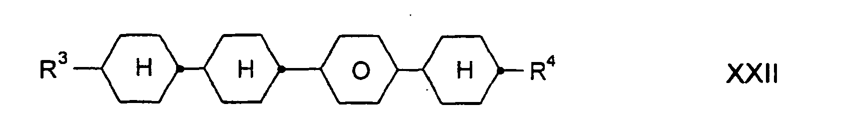 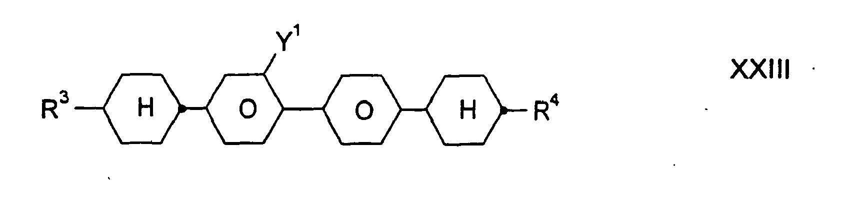 wherein R³ and R⁴ have independently of each other one of the meanings of R⁰ as defined above and Y¹ is H or F.

In the compounds of formula XX R³ and R⁴ are preferably alkyl with 1 to 8 C atoms or alkenyl with 2 to 7 C atoms.

In the compounds of formula XXI, XXII and XXIII R³ and R⁴ are preferably alkyl or alkoxy with 1 to 8 C atoms.

Compounds of the formula XXIII, wherein Y¹ is F, are especially preferred.

The invention furthermore relates to an electrooptical display, preferably a display having active matrix addressing and/ or a reflective display. The inventive display is preferably based on the OCB effect, a projection display and/or an LCoS^{™} display, characterized in that it contains, as a dielectric, a liquid-crystalline medium as described above.

Preferably the mixture essentially comprises compounds selected from the group comprising the generic formulae I, IIa, IIb and III to XXIII.

Preferred embodiments of the the present invention relate to mixtures that contain:
- at least 2 %, preferably at least 3 %, most preferably at least 4 %, and preferably up to 20%, most preferably up to 15 % by weight of one or more compounds of the formula I.
- at least 10 %, preferably at least 15 %, and preferably up to 45 %, most preferably up to 40% by weight of one or more compounds of the formula IIa.
- at least 3 %, preferably at least 5 %, and preferably up to 40 %, most preferably up to 30 % by weight of one or more compounds of the formula llb.
- at least 10 %, preferably at least 15 %, and preferably up to 75 %, most preferably up to 60 % by weight of one or more compounds of the formulae IV,
   in particular at least 8 %, preferably at least 15 %, and preferably up to 50 %, most preferably up to 40 % by weight of one or more compounds of the formulae IVb and/ or IVc, and
   in particular at least 1 %, preferably at least 3 %, and preferably up to 20 %, most preferably up to 15 % by weight of one or more compounds of the formula IVa.
- at least one compound of formula la and/or Ib.
- at least one compound of formula IIa, in particular wherein X⁰ is F, especially wherein R⁰ is alkyl with 1 to 8 C-atoms.
- at least one compound of formula llb, in particular wherein X⁰ is Cl, especially wherein R⁰ is alkyl with 1 to 8 C-atoms.
- at least one compound of formula IVb and/ or IVc, in particular wherein X⁰ is F, especially wherein R⁰ is alkyl with 1 to 8 C-atoms.
- at least one compound of formula IVa, in particular wherein X⁰ is F, especially wherein R⁰ is alkyl with 1 to 8 C-atoms.
- at least one compound of formula IIIa1, in particular wherein alkenyl is vinyl.
- at least one compound of formula IXa, in particular wherein X⁰ is F.
- one or more compounds of formula XVIIa, in particular wherein X⁰ is F, OCF₃ or OCHF₂.
- at least one compound of formula XXIII, in particular wherein Y¹ is F.

The compounds of formula IIa, llb, and III to XXIII are known from prior art or can be prepared according to known methods.

By using compounds of formula I it is possible to obtain inventive highly polar liquid crystalline mixtures with at the same time high birefringence and high clearing point. In addition, the use of compounds of formula IIa leads to high values of the dielectrical anisotropy in the inventive mixtures. Furthermore, liquid crystal mixtures according to the invention, comprising compounds of formula llb, exhibit a very high birefringence.

The liquid-crystal mixture preferably has a nematic phase range of at least 75 K, in particular at least 90 K, and a clearing point above 70 °C, in particular above 80 °C, especially above 90°C.

The dielectric anisotropy is preferably greater than +8, very preferably at least +10, most preferably equal or greater than +11.

The mixtures according to the present invention usually are based on medium polar components having the indicated core structure and other non-cyano components. Of course, however, such mixtures can also additionally contain known cyano liquid crystalline components, preferably compounds of the formula XXIV 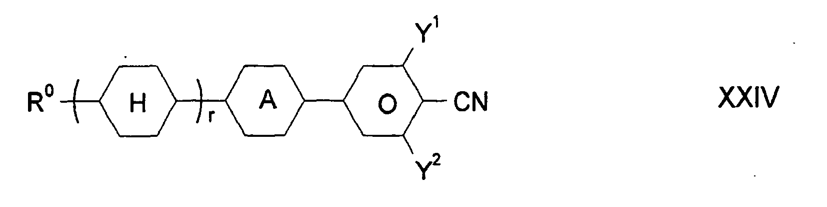 wherein R⁰, r, Y¹ and Y² have the meanings given above, and 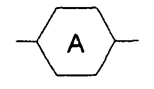 is trans-1,4-cyclohexylene or 1,4-phenylene,
if extremely high values for the holding ratio (HR) are not needed, e.g. for TN or STN-use. The resulting mixtures are important for achieving very broad nematic phase ranges including very low temperatures (outdoor use).

The mixtures are preferably based on halogenated components of medium polarity and/or are essentially free of cyano components.

The liquid crystal mixtures according to the present invention are also suitable as liquid crystal media for use in cholesteric liquid crystal displays, in particular in SSCT ("surface stabilized cholesteric texture") and PSCT- ("polymer stabilized cholesteric texture") displays, as described for example in WO 92/19695, US 5,384,067, US 5,453,863, US 6,172,720 or US 5,661,533. Cholesteric liquid crystal displays typically comprise a cholesteric liquid crystal medium consisting of a nematic component and an optically active component and, compared to TN- and STN displays, exhibit a significantly higher helical twist and show selective reflection of circular polarised light. The reflection wavelength is given by the product of the pitch of the cholesteric helix and the mean refractive index of the cholesteric liquid crystal medium.

For this purpose one or more chiral dopants are added to the liquid crystal mixture according to the present invention, wherein the twisting power and concentration of the dopants are selected such that the resulting liquid crystal medium has a cholesteric phase at room temperature and a reflection wavelength that lies preferably within the visible, UV or IR range of the electromagnetic spectrum, in particular within the range from 400 to 800 nm. Suitable chiral dopants are known to the expert and commercially available, like for example cholesteryl nonanoate (CN), CB15, R/S-811, R/S-1011, R/S-2011, R/S-3011 or R/S-4011 (Merck KGaA, Darmstadt). Particularly suitable are dopants with high twisting power comprising a chiral sugar group, in particular sorbitol derivatives as disclosed in WO 98/00428. In case two or more dopants are used, they can exhibit the same or opposite twist sense and the same or opposite sign of the linear temperature coefficient of the twist.

In the components of the formulae IIa, IIb and III to XXIV R⁰, R¹, R³, and R⁴ are preferably a straight-chained alkyl radical of 1 to 8 carbon atoms or is straight-chained methoxy alkyl. Preferred alkyl groups are methyl, ethyl, propyl, butyl, pentyl, hexyl, heptyl and octyl, in particular ethyl, propyl, butyl and pentyl. Preferred methoxy alkyl groups are methoxymethyl, methoxyethyl, methoxypropyl, methoxybutyl, methoxypentyl, methoxyhexyl, methoxyheptyl.

The term "alkoxy" comprises straight chain and branched alkoxy groups with 1 to 8 C atoms. Straight chain alkoxy groups are preferred. Thus, preferred alkoxy groups are methoxy, ethoxy, propoxy, butoxy, pentoxy, hexoxy, heptoxy and octoxy.

The term "alkenyl" comprises straight chain and branched alkenyl groups with 2 to 7 C atoms. Straight chain alkenyl groups are preferred. Further preferred alkenyl groups are C₂-C₇-1 E-alkenyl, C₄-C₇-3E-alkenyl, C₅-C₇-4-alkenyl, C₆-C₇-5-alkenyl and C₇-6-alkenyl, in particular C₂-C₇-1 E-alkenyl, C₄-C₇-3E-alkenyl and C₅-C₇-4-alkenyl.

Of these, especially preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl and 6-heptenyl. Alkenyl groups with up to 5 C atoms are particularly preferred.

In the foregoing and in the following those compounds containing at least one cyclohexane ring are preferred wherein the cyclohexane ring is trans-substituted.

The preparation of the mixtures according to the invention is effected in the conventional manner. In general, the desired amount of the components which is used in the smaller amount is dissolved in the components which constitutes the main constituent, preferably at elevated temperature. If this temperature is chosen to be above the clearing point of the main constituent, the completeness of the process of dissolving can be observed particularly easily.

However, it is also possible to mix solutions of the components in a suitable organic solvent, for example acetone, chloroform or methanol, and to remove the solvent, e.g. by distillation.

By means of suitable additives the liquid crystal phases according to the invention can be modified in such a way that they can be used in any hitherto disclosed kind of MLC display.

In the present application and in the examples below, the structures of the liquid-crystal compounds are indicated by means of acronyms, the transformation into chemical formulae taking place in accordance with Tables A and B below. All radicals CnH₂ₙ₊₁, CₘH₂ₘ₊₁ and CᵣH₂ᵣ₊₁ are straight-chain alkyl radicals and -CₛH₂ₛ- is a straight-chain alkylen group having n, m, r and s carbon atoms respectively. n, m, r and s are integers and are independently of each other preferably 0, 1, 2, 3, 4, 5, 6, 7, 8, 9, 10, 11 or 12. The coding in Table B is self-evident. In Table A, only the acronym for the parent structure is indicated. In individual cases, the acronym for the parent structure is followed, separated by a dash, by a code for the substituents R¹, R², L¹ and L² as follows:

| Code for R¹, | R¹ | R² | L¹ | L² |
|---|---|---|---|---|
| R², L¹, L² | | | | |
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CF₂H | F | F |

Preferred mixture components are found in Tables A and B.

**Table A:**

| | |
|---|---|
| 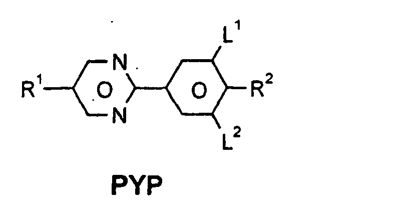 | 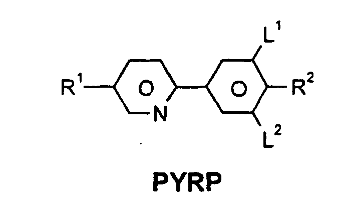 |
| 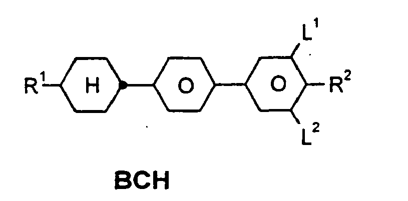 | 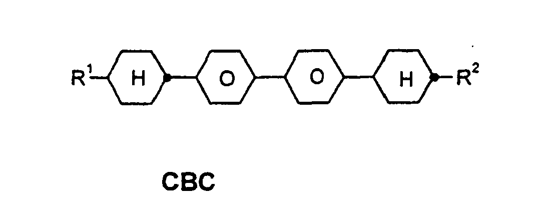 |
| 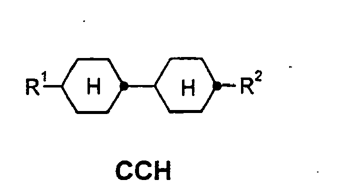 | 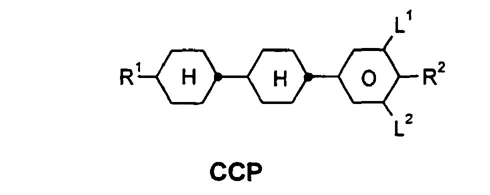 |
| 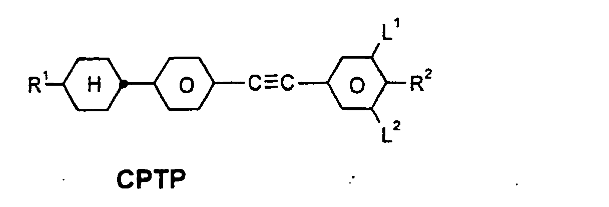 | |
| 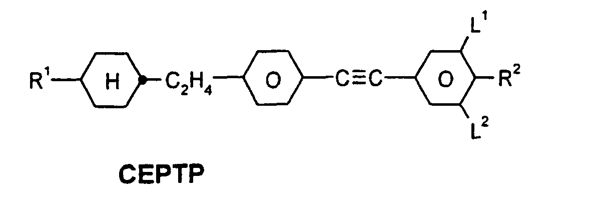 | |
| 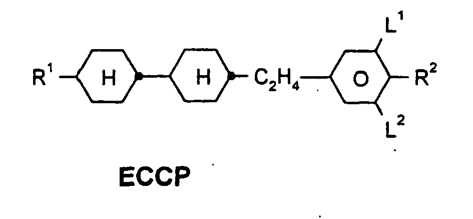 | 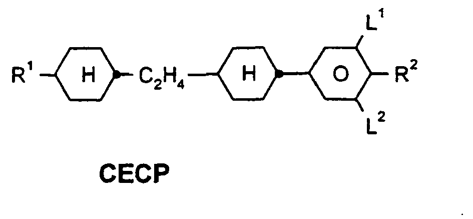 |
| 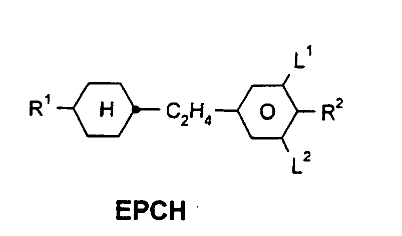 | 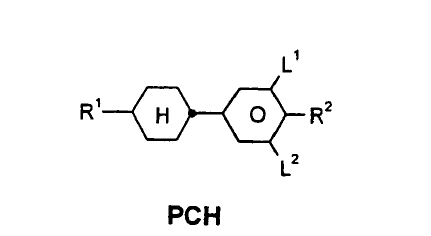 |
| 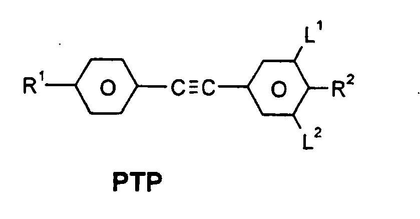 | 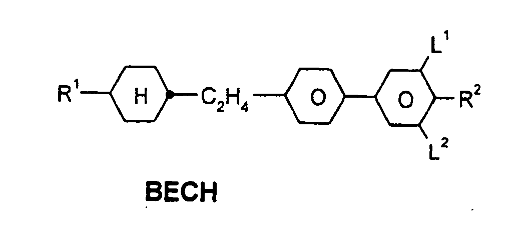 |
| 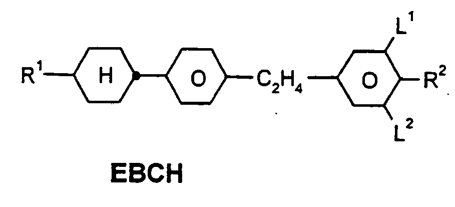 | 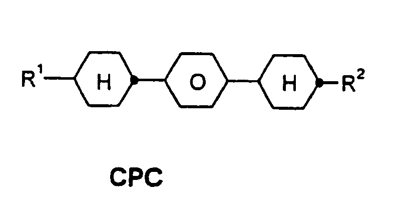 |
| 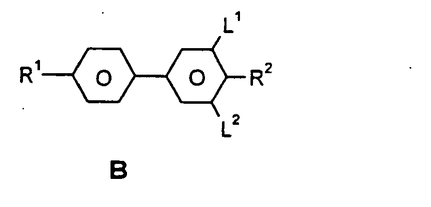 | 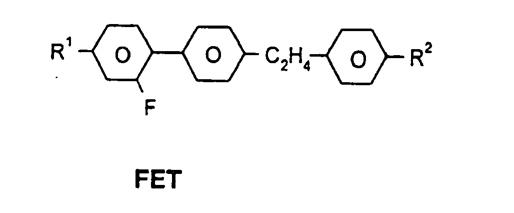 |
| 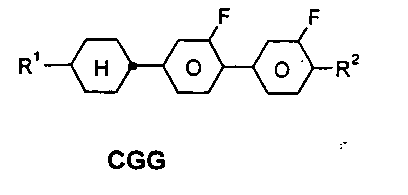 | 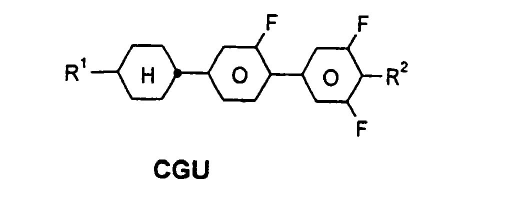 |
| 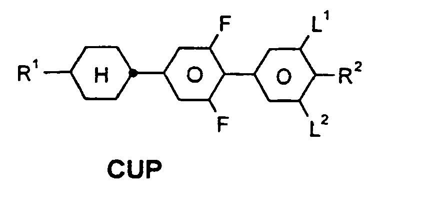 | |

**Table B:**

| | |
|---|---|
| 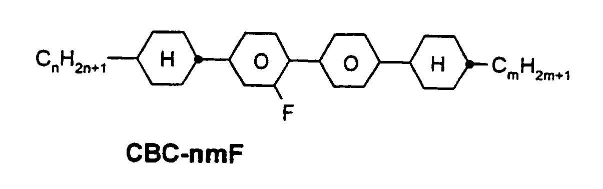 | |
| 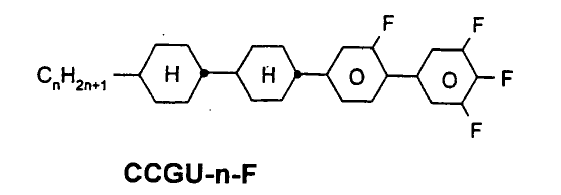 | |
| 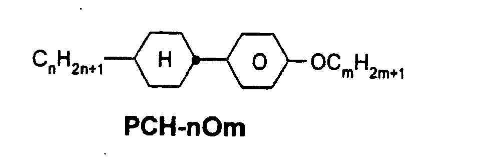 | |
| 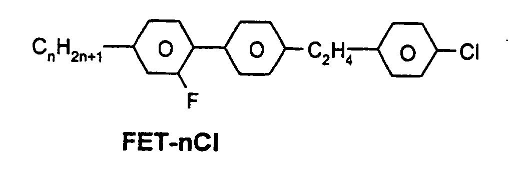 | |
| 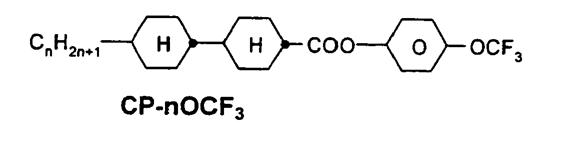 | |
| 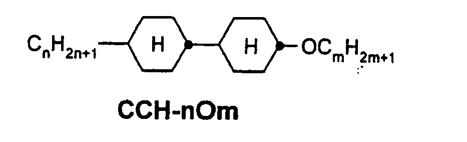 | |
| 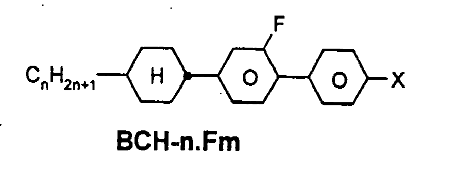 | |
| 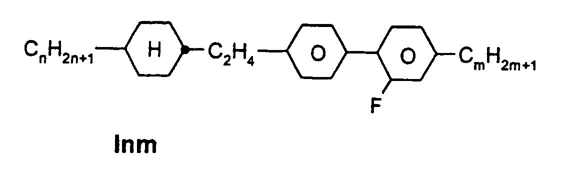 | |
| 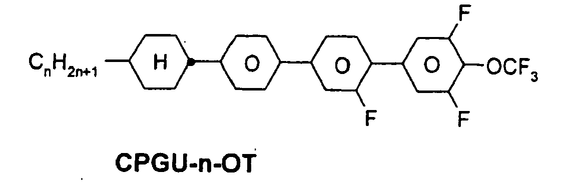 | |
| 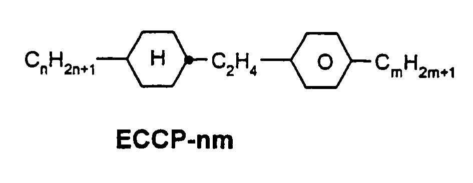 | 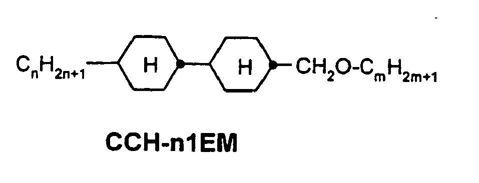 |
| 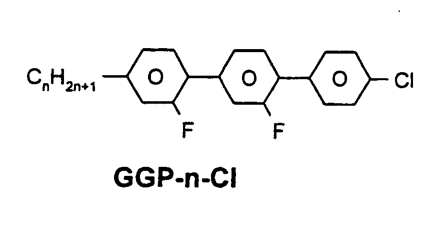 | 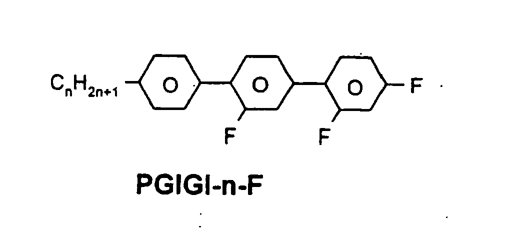 |
| 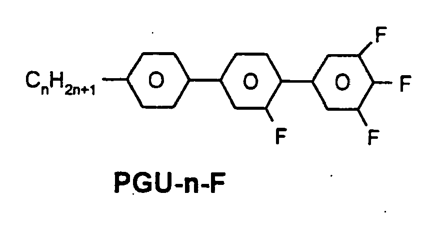 | 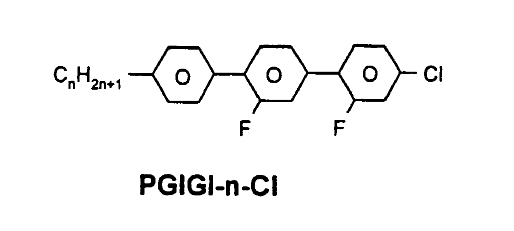 |
| 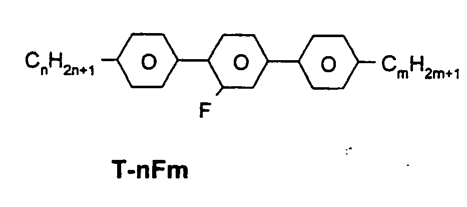 | 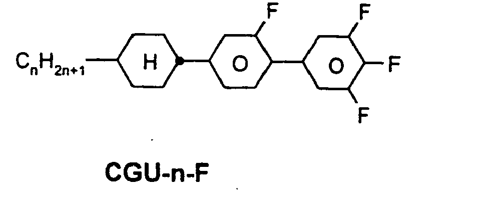 |
| 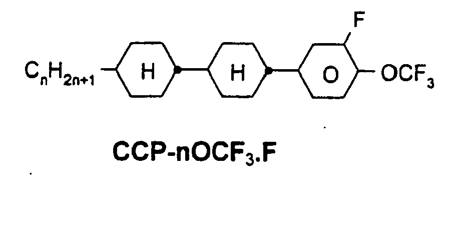 | 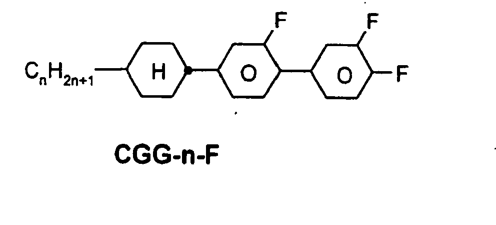 |
| 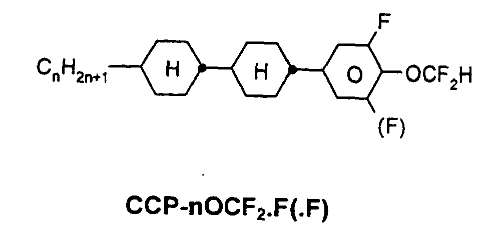 | 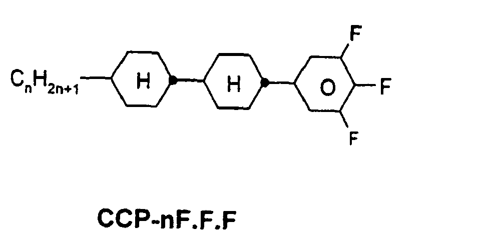 |
| 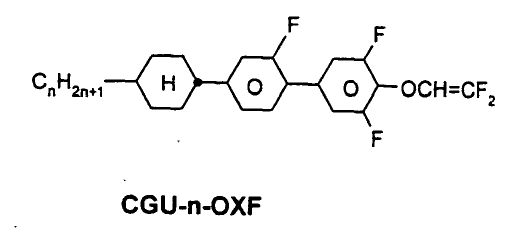 | 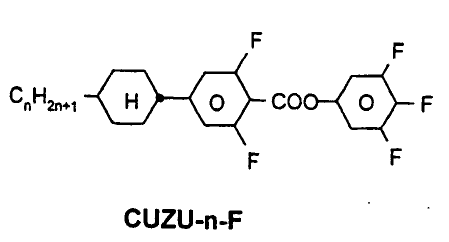 |
| 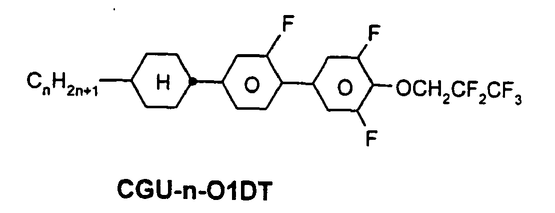 | |
| 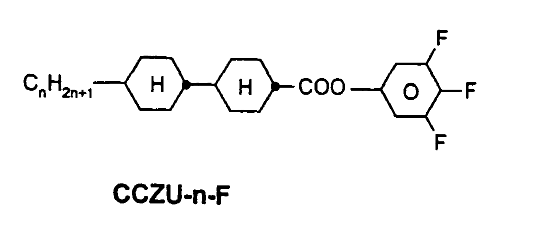 | |
| 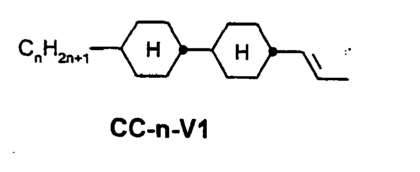 | 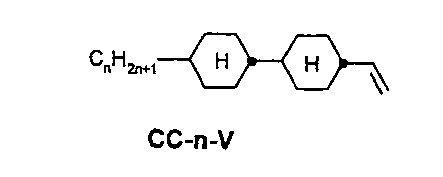 |
| 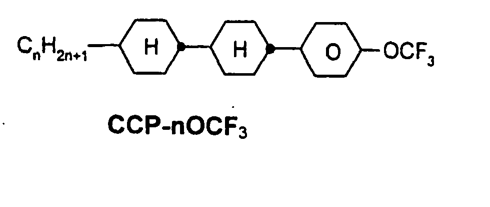 | |
| 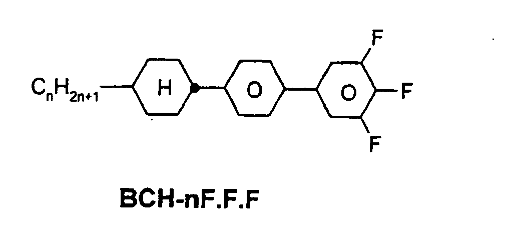 | |
| 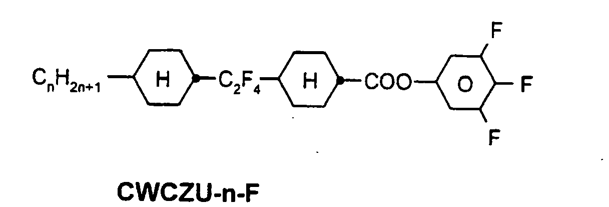 | |
| 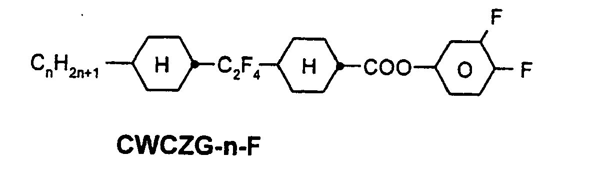 | |
| 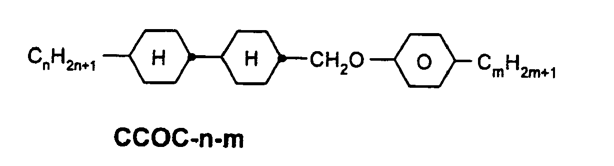 | |
| 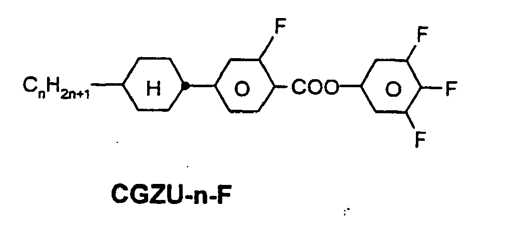 | |
| 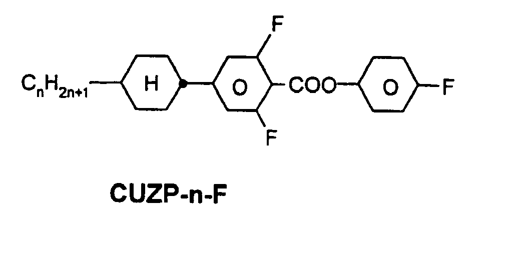 | |
| 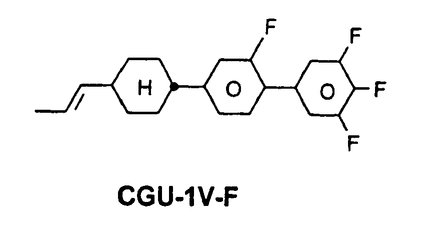 | 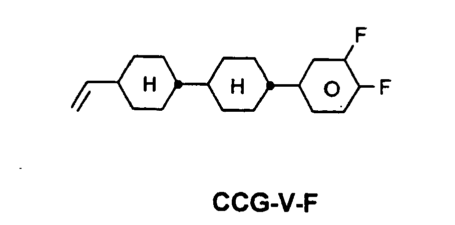 |
| 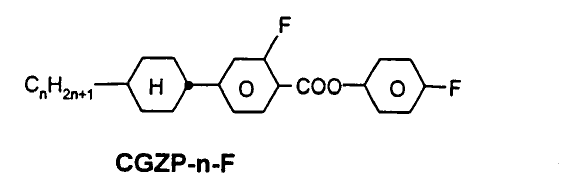 | |
| 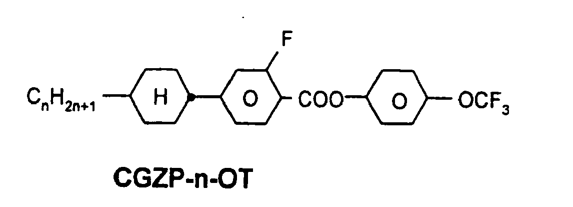 | |
| 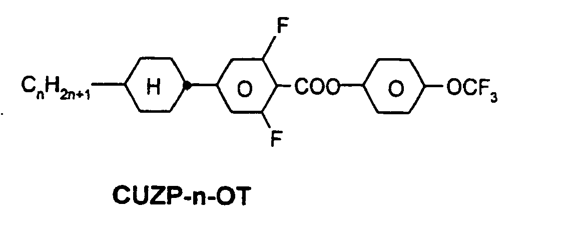 | |
| 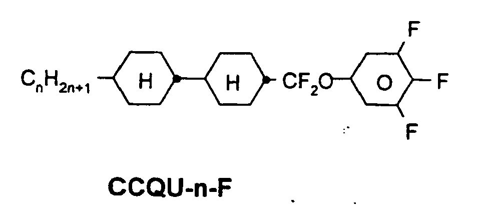 | 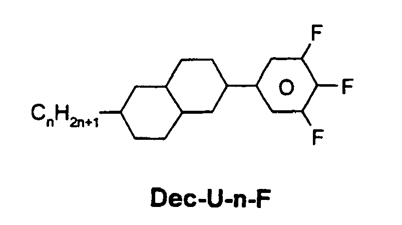 |
| 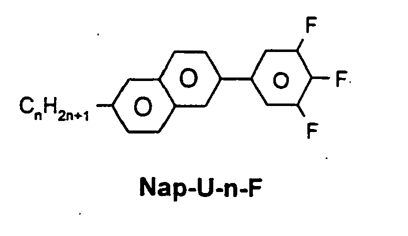 | |
| 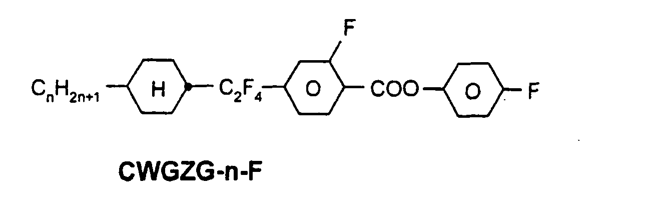 | |
| 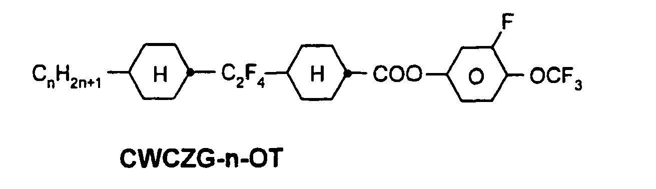 | |
| 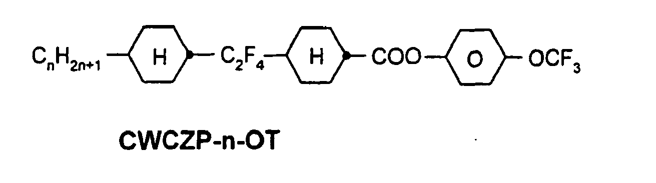 | |

**Table C:**

| | |
|---|---|
| Suitable dopants are listed in table C. One or more of these are generally added to the liquid crystalline medium according to the invention. | |
| 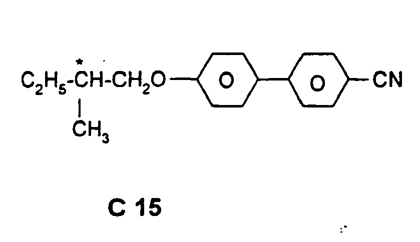 | 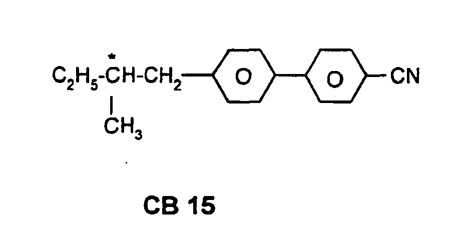 |
| 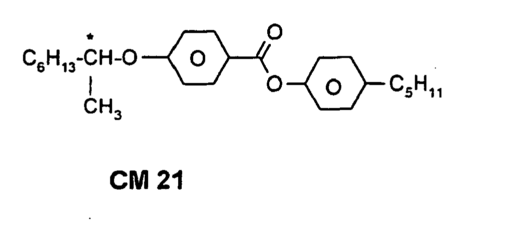 | |
| 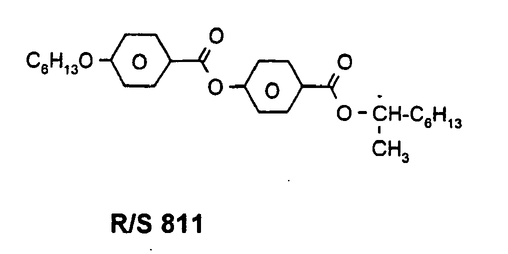 | |
| 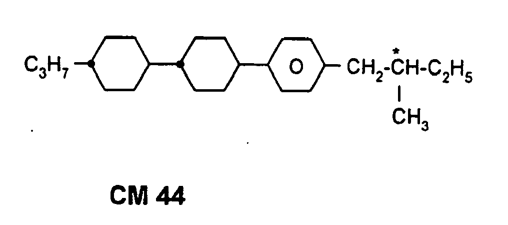 | |
| 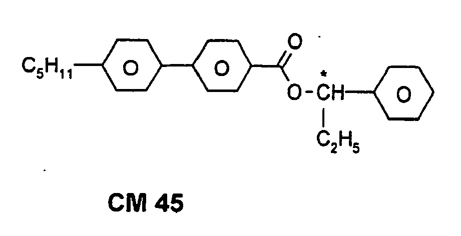 | 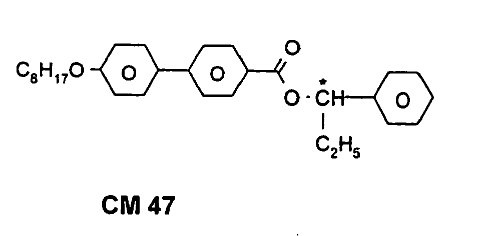 |
| 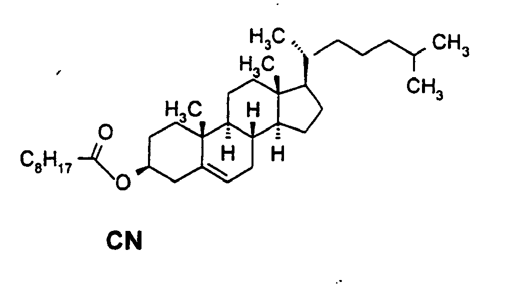 | |
| 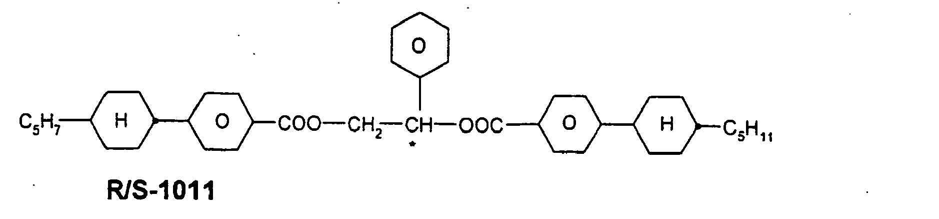 | |
| 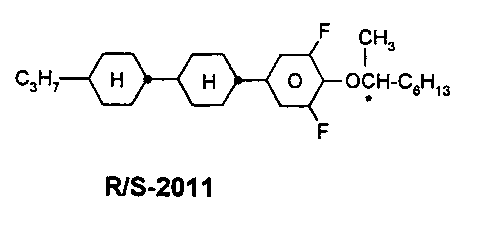 | |
| 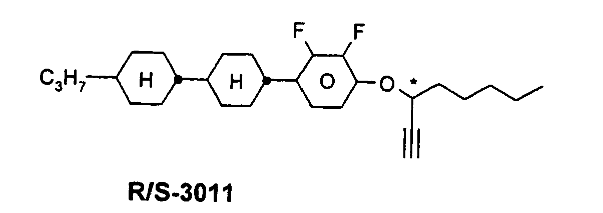 | |
| 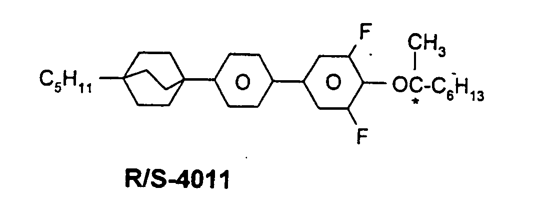 | |

**Table D**

| | |
|---|---|
| Examples of stabilizers, which may be added to the liquid crystalline mixtures according to the invention, are listed below. | |
| 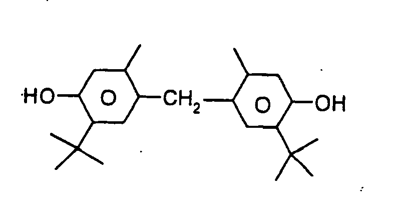 | 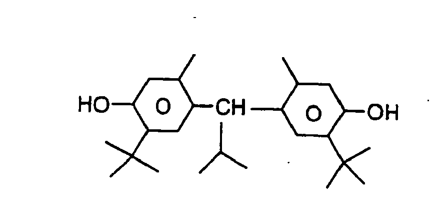 |
| 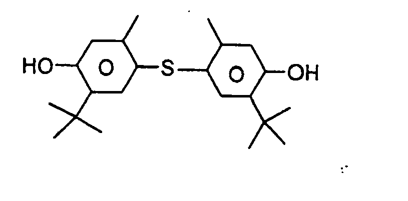 | 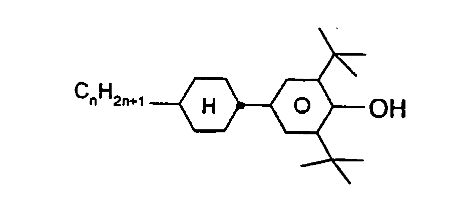 |
| 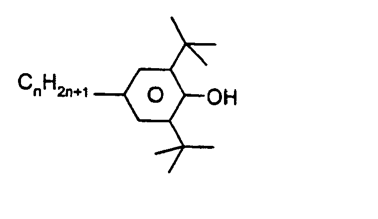 | 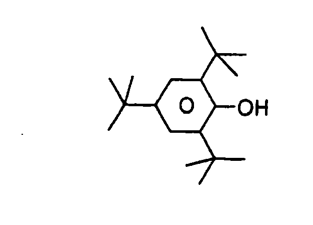 |
| 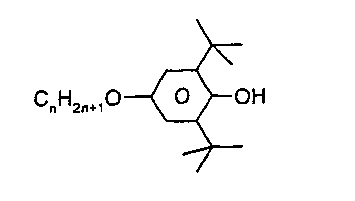 | 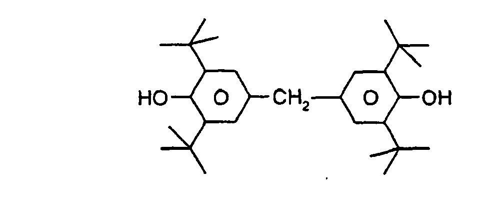 |
| 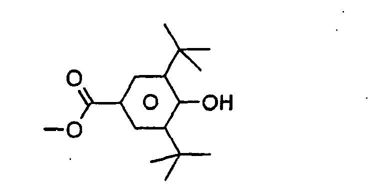 | 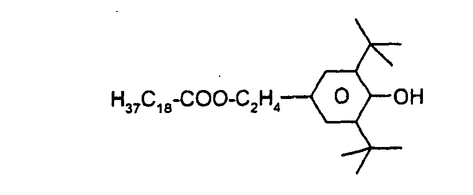 |
| 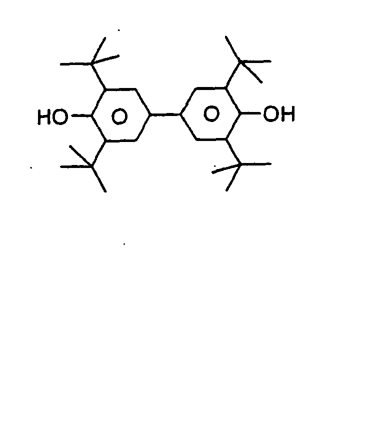 | 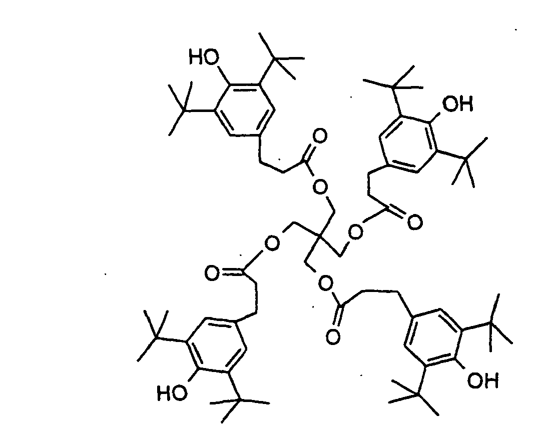 |
| 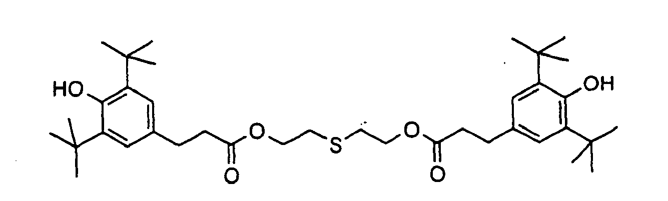 | |
| 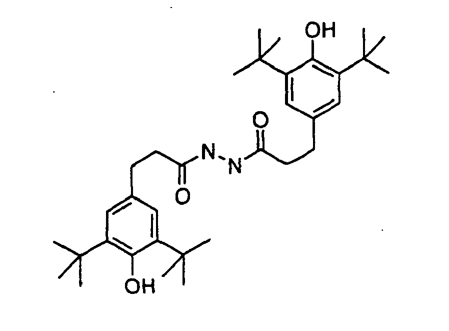 | 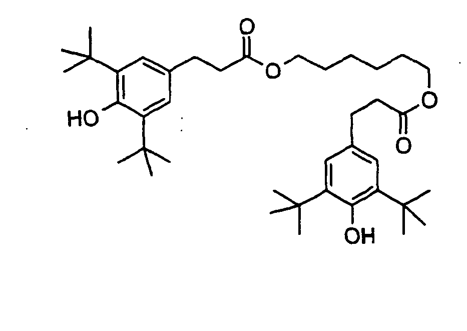 |
| 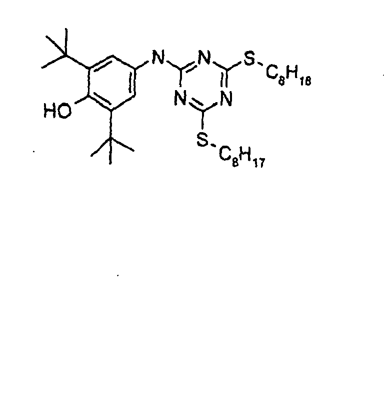 | 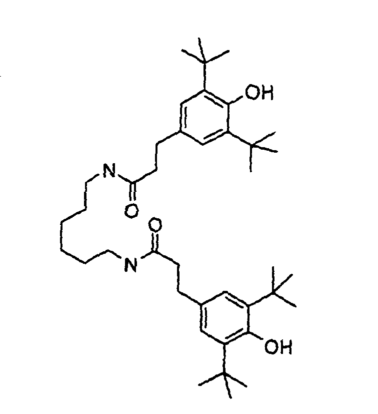 |
| 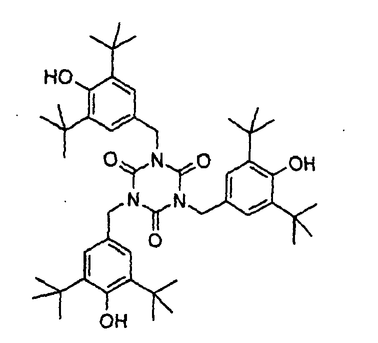 | 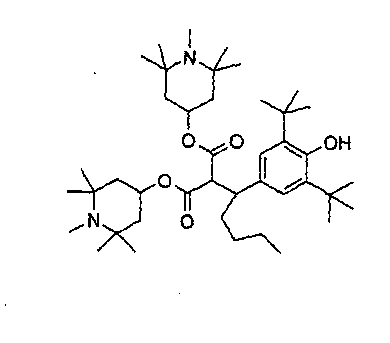 |
| 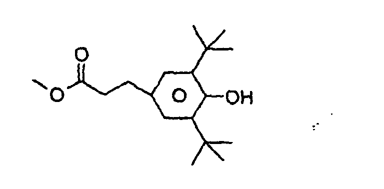 | 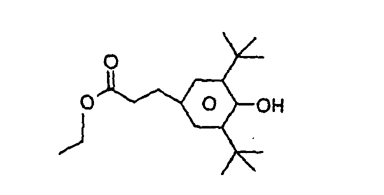 |
| 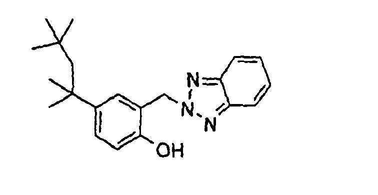 | 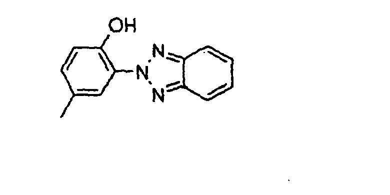 |
| 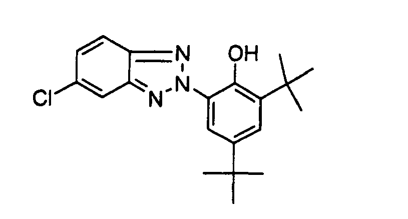 | 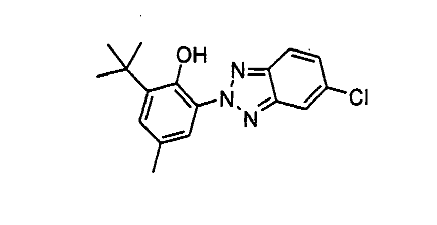 |
| 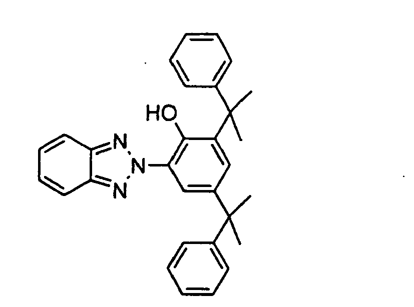 | 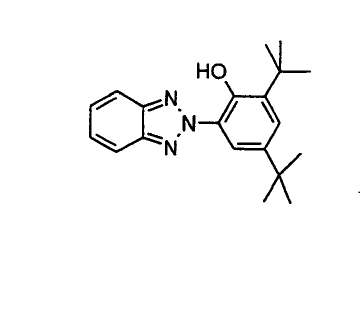 |
| 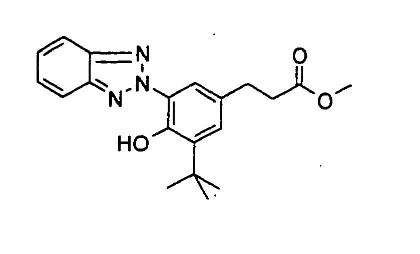 | 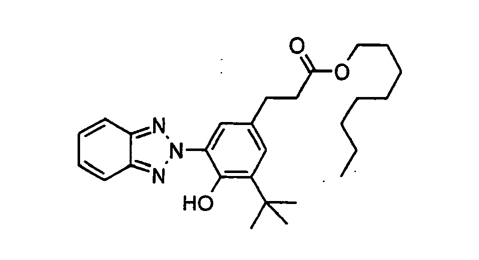 |
| 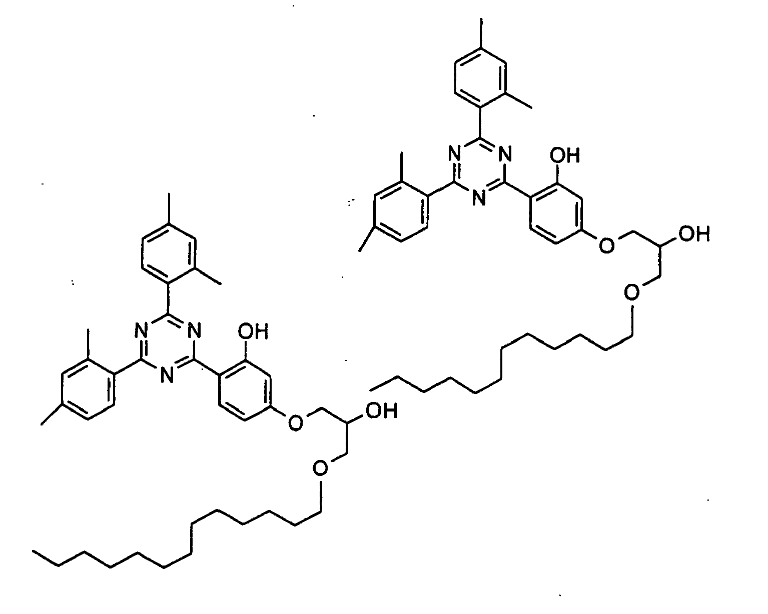 | |
| 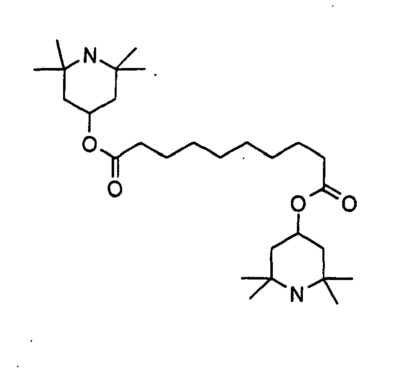 | 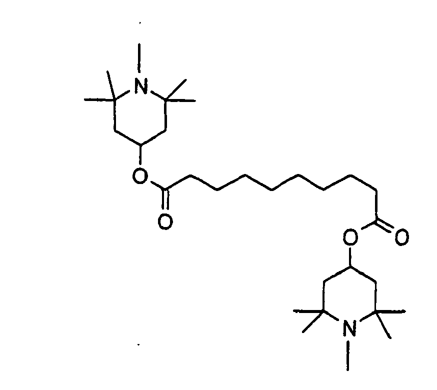 |

Particular preference is given to mixtures according to the invention which, besides one or more compounds of the formula I, comprise two, three or more compounds selected from Table B.

The examples below serve to illustrate the invention without limiting it. In the examples, the melting point and clearing point of a liquid crystal substance are given in degrees Celsius. The following abbreviations are used C = crystalline state, N = nematic phase, Sm = smectic phase and I = isotropic phase. The data between these symbols are the transition temperatures. The percentages are by weight.

The following abbreviations are used
- Δn: denotes the optical anisotropy measured at 20 °C and 589 nm
- nₑ: denotes the extraordinary refractive index at 20 °C and 589 nm
- Δε: denotes the dielectric anisotropy at 20°C
- ε_{∥}: denotes the dielectric constant in the parallel direction to the molecular axis
- cp: denotes the clearing point [°C]
- γ₁: denotes the rotational viscosity [mPa s]
- V₀: Fredericksz threshold [V]

- THF: tetrahydrofurane
- MTB: tert.-butyl-methyl-ether

### Example 1: Synthesis of CPGU-3-OT

### 1.1 Synthesis of the boronic acid (3)

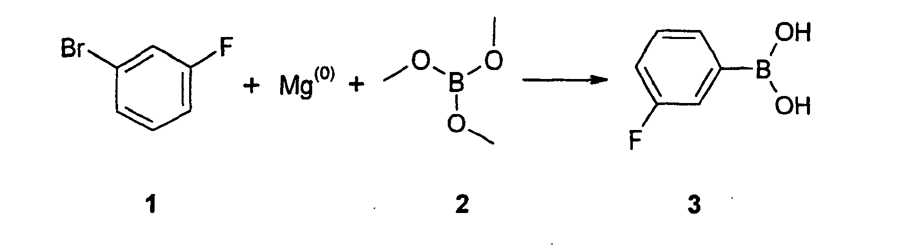

1.375 mol Mg in 100 ml THF are reacted with 1.25 mol 1-brom-3-fluorobenzene (1) in 350 ml THF under the conditions of a Grignard reaction at boiling heat. After the addition of the fluorobenzene, the reaction mixture is refluxed for 30 min. Afterwards 1.375 mol trimethylborate (2) in 300ml THF are added to the reaction mixture dropwise. After one hour 500 ml MTB are added and then 200 ml concentrated HCI are added dropwise at a maximum of 20 °C, while cooling. The following working up is performed like usual.

### 1.2 Synthesis of 3-fluoro-4'-(trans-4-propyl-cyclohexyl)-biphenyl (5)

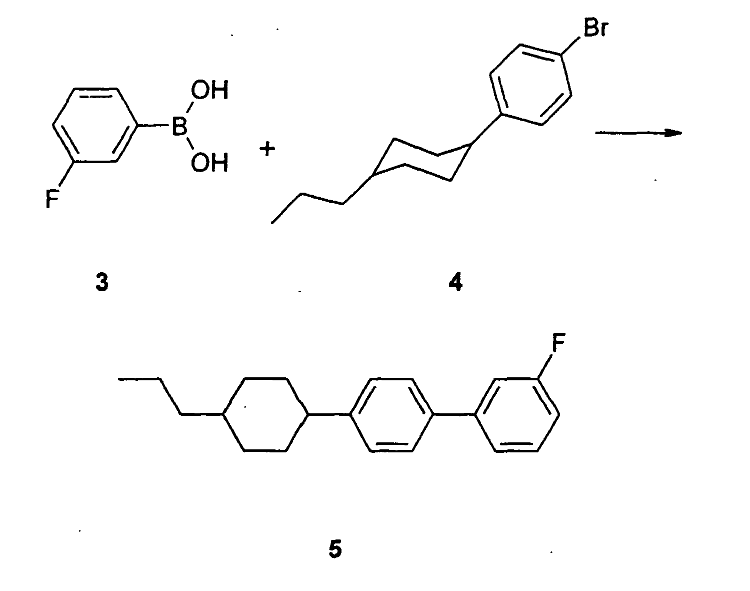

0.004 mol bis(triphenylphosphin)-palladium(II)-chloride and 0.004 mol hydraziniumhydroxide are added to 0.100 mol sodium metaborat-octahydrate in 80 ml water. To this mixture 0.200 mol 1-bromo-4-(trans-4-propyl-cyclohexyl)benzene (4) in 150 ml THf are added dropwise. After stirring for 5 min, 0.200 mol of the boronic acid (3) in 50 ml THF are added dropwise. The reaction mixture is refluxed for 10 hours, cooled to room temperature (20 °C) and worked up conventionally.

### 1.3 Synthesis of the boronic acid (7)

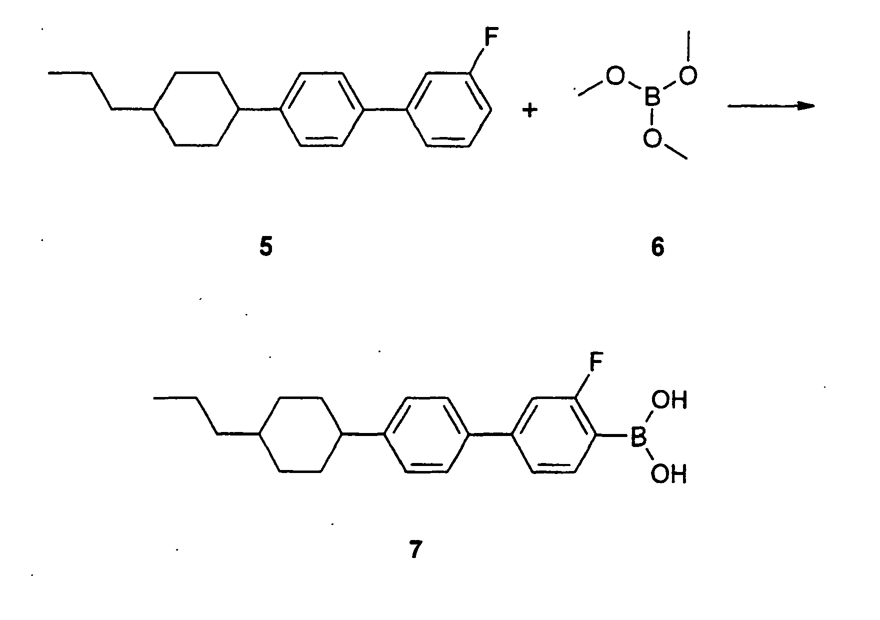

0.093 mol of the compound 5 in 60 ml THF are added to 0.093 mol potassium-tert-butylate in 100 ml THF at -80 °C dropwise. Furthermore, at -80 °C 0.093 mol butyllithium (15 % solution in n-hexane) are added dropwise. The reaction mixture is stirred for 20 min. Afterwards 0.093 mol trimethylborate in 60 ml THF is added dropwise. After allowing the reaction mixture to warm to room temperature (20 °C), 200 ml water are added and a pH of 2 is achieved with 40 ml half concentrated HCI, followed by a conventional work-up.

### 1.4 Synthesis of CPGU-3-OT (9)

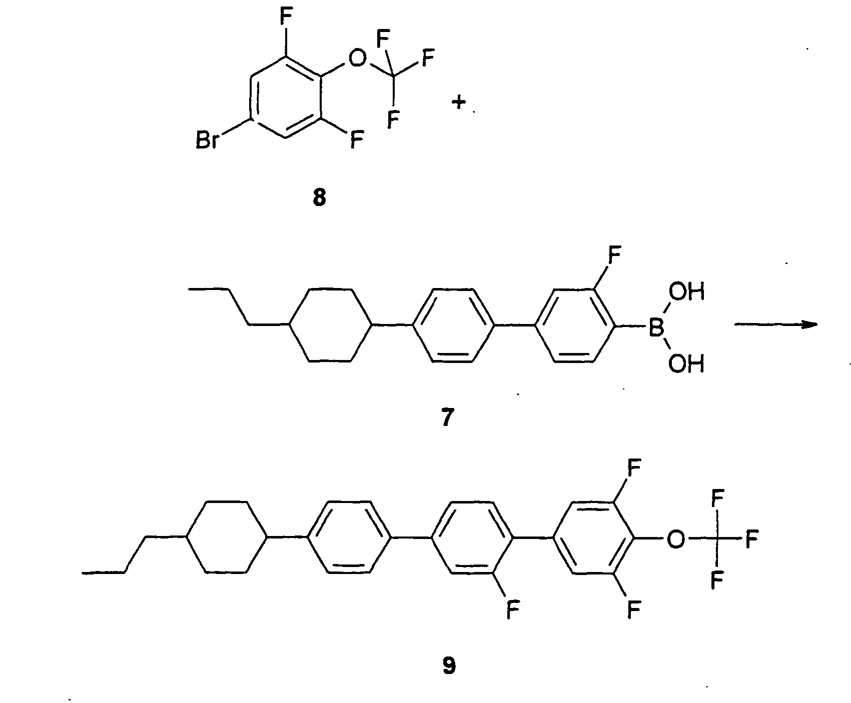

A solution of 0.040 mol Na₂CO₃ in 30 ml water is added to a mixture of 25 mmol of the bromide (8), 25 mmol of the boronic acid (7), 80 ml 2-propanole, 0.125 mmol palladium(II)acetate and 0.375 mmol triphenylphosphine. The reaction mixture is refluxed under stirring for 6-12 hours. After cooling to 20 °C, the reaction mixture is poured onto 400 ml water. The precipitate is filtered by vaccuum and washed with cold water and ethanol. The resulting powder is recrystallized. A NMR and mass spectroscopy analysis yields the expected signals.

The following compounds of the formula I, speciefied by R¹ and X¹, are prepared by procedures similar to the previous example.

| R¹ | X¹ | |
|---|---|---|
| -CH₃ | -F | |
| -C₂H₅ | -F | K 120 N 197.51, Δn = 0.2213, Δε = 17.8 |
| -C₃H₇ | -F | K 113 N 223.8 1, Δn = 0.2316, Δε = 17.2 |
| -C₄H₉ | -F | K 108 N 215.1 I, Δn = 0.2219, Δε = 16.9 |
| -C₅H₁₁ | -F | |
| -C₆H₁₃ | -F | |
| -C₇H₁₅ | -F | |
| -CH₃ | -OCHF₂ | |
| -C₂H₅ | -OCHF₂ | K 106 N 228.0 I, Δn = 0.2158, Δε = 16.4 |
| -C₃H₇ | -OCHF₂ | |
| -C₄H₉ | -OCHF₂ | K 54 SmA 62 N 247.5 I, Δn = 0.2109, Δε = 15.5 |
| -C₅H₁₁ | -OCHF₂ | |
| -C₆H₁₃ | -OCHF₂ | |
| -C₇H₁₅ | -OCHF₂ | |
| -CH₃ | -OCF₃ | |
| -C₂H₅ | -OCF₃ | K 125 N 220.5 I, Δn = 0.2090, Δε = 21.9 |
| -C₃H₇ | -OCF₃ | K 94 N 240.0 I, Δn = 0.2165, Δε = 19.7 |
| -C₄H₉ | -OCF₃ | K 76 SmA (57.5) N 235.1 I, Δn = 0.2092, Δε= 20.4 |
| -C₅H₁₁ | -OCF₃ | |
| -C₆H₁₃ | -OCF₃ | |
| -C₇H₁₅ | -OCF₃ | |

### Example 2

A liquid crystal mixture is prepared that comprises

| | | | |
|---|---|---|---|
| PGIGI-3-F | 11.00 % | cp | 101.0 °C |
| PGU-2-F | 10.00 % | nₑ | 1.6912 |
| PGU-3-F | 10.00 % | Δn | 0.1809 |
| PGU-5-F | 9.00 % | ε_{∥} | 19.1 |
| BCH-2F.F | 9.00 % | Δε | 14.5 |
| BCH-3F.F | 9.00 % | V₀ | 0.95 V |
| BCH-5F.F | 9.00 % | | |
| BCH-5F.F.F | 4.00 % | | |
| CGU-3-F | 5.00 % | | |
| CCGU-3-F | 9.00 % | | |
| CBC-53F | 4.00 % | | |
| CPGU-3-OT | 11.00 % | | |

### Example 3

A liquid crystal mixture is prepared that comprises

| | | | |
|---|---|---|---|
| PGIGI-3-F | 11.00 % | cp | 99.0 °C |
| PGU-2-F | 8.00 % | nₑ | 1.6872 |
| PGU-3-F | 10.00 % | Δn | 0.1763 |
| PGU-5-F | 8.00 % | | |
| BCH-2F.F | 9.00 % | | |
| BCH-3F.F | 10.00 % | | |
| BCH-5F.F | 10.00 % | | |
| BCH-5F.F.F | 5.00 % | | |
| CGU-3-F | 6.00 % | | |
| CCGU-3-F | 10.00 % | | |
| CBC-53F | 3.00 % | | |
| CPGU-3-OT | 10.00 % | | |

### Example 4

A liquid crystal mixture is prepared that comprises

| | | | |
|---|---|---|---|
| PGIGI-3-F | 11.00 % | cp | 103.0 °C |
| PGU-2-F | 10.00 % | nₑ | 1.6930 |
| PGU-3-F | 12.00 % | Δn | 0.1827 |
| PGU-5-F | 9.00 % | | |
| BCH-2F.F | 7.00 % | | |
| BCH-3F.F | 8.00 % | | |
| BCH-5F.F | 8.00 % | | |
| BCH-5F.F.F | 11.00 % | | |
| CCGU-3-F | 10.00 % | | |
| CBC-53F | 2.00 % | | |
| CBC-33F | 3.00 % | | |
| CPGU-3-OT | 9.00 % | | |

### Example 5

A liquid crystal mixture is prepared that comprises

| | | | |
|---|---|---|---|
| PGIGI-3-F | 11.00 % | cp | 102.0 °C |
| PGU-2-F | 10.00 % | nₑ | 1.6941 |
| PGU-3-F | 12.00 % | Δn | 0.1836 |
| PGU-5-F | 9.00 % | | |
| BCH-2F.F | 8.00 % | | |
| BCH-3F.F | 8.00 % | | |
| BCH-5F.F | 9.00 % | | |
| BCH-5F.F.F | 4.00 % | | |
| CGU-3-F | 4.00 % | | |
| CCGU-3-F | 10.00 % | | |
| CBC-53F | 5.00 % | | |
| CPGU-3-OT | 10.00 % | | |

### Example 6

A liquid crystal mixture is prepared that comprises

| | | | |
|---|---|---|---|
| GGP-3-CL | 8.00 % | cp | 102.0 °C |
| GGP-5-CL | 20.00 % | nₑ | 1.7137 |
| PGIGI-3-F | 11.00 % | Δn | 0.1992 |
| BCH-3F.F | 5.00 % | ε_{∥} | 16.7 |
| BCH-5F.F | 5.00 % | Δε | 12.0 |
| BCH-3F.F.F | 5.00 % | V₀ | 1.13 V |
| BCH-5F.F.F | 5.00 % | | |
| CCG-V-F | 12.00 % | | |
| PGU-2-F | 8.00 % | | |
| PGU-3-F | 11.00 % | | |
| CBC-53F | 5.00 % | | |
| CPGU-3-OT | 5.00 % | | |

### Comparison Example

A liquid crystal mixture is prepared that comprises

| | | | |
|---|---|---|---|
| GGP-5-CL | 16.00 % | cp | 102.0 °C |
| BCH-2F.F | 11.00 % | nₑ | 1.6692 |
| BCH-3F.F | 11.00 % | Δn | 0.1610 |
| BCH-5F.F | 6.00 % | ε_{∥} | 15.3 |
| CGU-2-F | 9.00 % | Δε | 10.9 |
| CGU-3-F | 9.00 % | V₀ | 1.14 V |
| CGU-5-F | 8.00 % | | |
| BCH-3F.F.F | 8.00 % | | |
| CCGU-3-F | 7.00 % | | |
| BCH-32 | 10.00 % | | |
| CBC-33 | 3.00 % | | |
| CBC-53 | 2.00 % | | |

and exhibits a significantly lower optical anisotropy than the mixtures of examples 1 to 5 comprising a compound of formula I (CPGU-n-OT).

## Claims

1. A liquid-crystalline medium based on a mixture of polar compounds of positive dielectric anisotropy, **characterized in that** it contains one or more compounds of the formula I 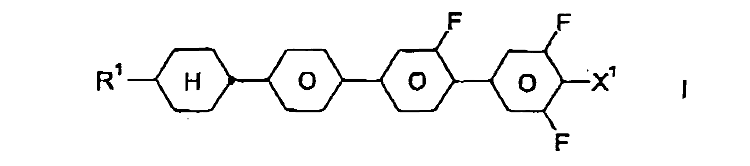 wherein
X¹ is F, Cl, CHF₂, CF₃, OCHF₂ or OCF₃ and
R¹ is alkyl with 1 to 20 C atoms
and one or more compounds of the group of formulae IIa, IIb and XVIIa 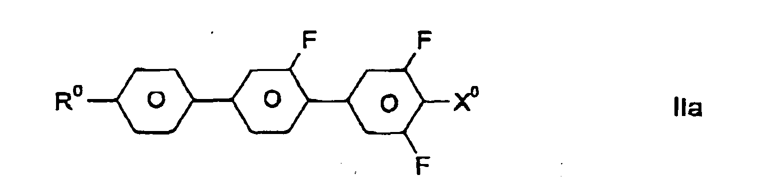 wherein
R⁰ is alkyl, alkoxy, fluoroalkyl, alkenyl or oxaalkenyl with up to 9 C atoms and
X⁰ is F, Cl, CF₃, OCF₃, OCHF₂, fluoroalkyl or fluoroalkoxy with up to 7 carbon atoms, 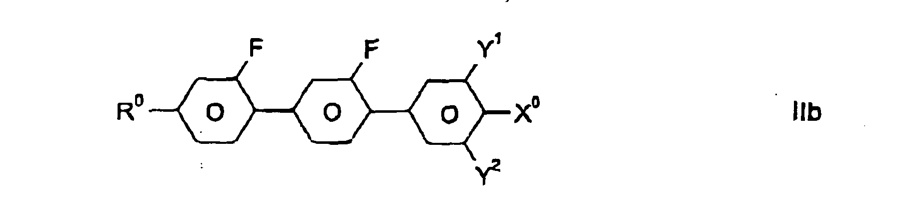
wherein
R⁰ is alkyl, alkoxy, fluoroalkyl, alkenyl or oxaalkenyl with up to 9 C atoms,
X⁰ is F, Cl, CF₃, OCF₃, OCHF₂, fluoroalkyl or fluoroalkoxy with up to 7 carbon atoms, and
Y¹ and Y² are each independently of one another H or F, 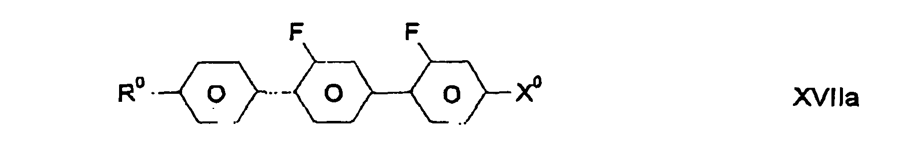
R⁰ is alkyl, alkoxy, fluoroalkyl, alkenyl or oxaalkenyl with up to 9 C atoms,
X⁰ is F or Cl.

2. Medium according to claim 1 **characterized in that** X¹ is OCHF₂ or OCF₃.

3. Medium according to claim 2 **characterized in that** X¹ is QCF₃.

4. Medium according to one of the claims 1 to 3 **characterized in that** it comprises one or more compounds of the formula XVIIa.

5. Medium according to one of the claims 1 to 4 **characterized in that** it additionally comprises one or more compounds selected from the group of compounds of formulae IVa and IXa 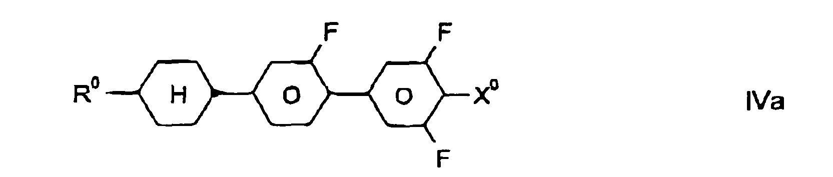 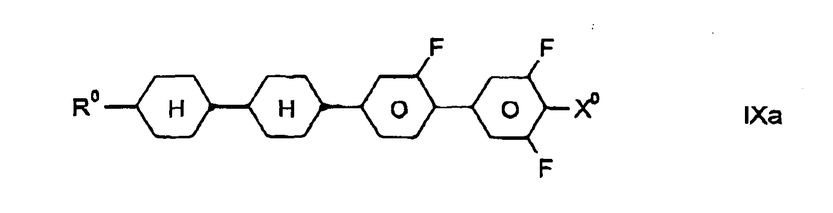 wherein
R⁰ n-alkyl with 1 to 8 C atoms or alkenyl with 2 to 7 C atoms and
X⁰ F, Cl, CF₃, OCF₃ or OCHF₂,

6. Medium according to at least one of claims 1 to 5 **characterized in that** it has an optical anisotropy Δn ≥ 0.16.

7. Medium according to one of the claims 1 to 6 **characterized in that** it comprises 3 to 20 % by weight of one or more compounds of the formula I.

8. Medium according to one of the claims 1 to 7 **characterized in that** it comprises 10 to 40 % by weight of one or more compounds of the formula IIa.

9. Medium according to one of the claims 1 to 8 **characterized in that** it comprises 5 to 30 % by weight of one or more compounds of the formula IIb.

10. A cholesteric liquid crystalline medium **characterized in that** it comprises as a nematic component a liquid crystalline medium according to one or more of the claims 1 to 9 and as an optically active component one or more chiral dopants.

11. Use of the liquid-crystalline medium according to at least one of claims 1 to 9 in electrooptical liquid crystal displays.

12. Electrooptical liquid-crystal display containing a liquid-crystalline medium according to at least one of the claims 1 to 9.

13. Electrooptical liquid-crystal display according to claim 12 **characterized in that** it is an active matrix display.

14. Electrooptical liquid-crystal display according to at least one of claims 12 and 13 **characterized in that** it is a reflective display.

15. Electrooptical liquid-crystal display according to one of the claims 12 to 14 **characterized in that** it is a display of a projection, LCoS^{™} or OCB mode.

16. Cholesteric liquid crystal display, in particular a SSCT- or PSCT-display, comprising a cholesteric liquid crystalline medium according to claim 10.

17. A liquid crystalline compound of the formula Ib 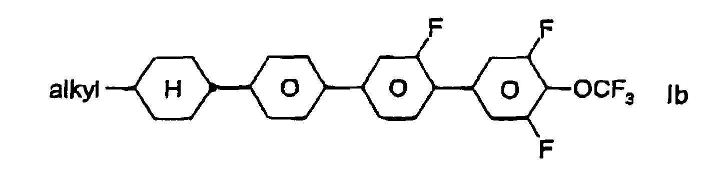 wherein
alkyl is an alkyl group with 1 to 8 C atoms.

## Patentansprüche

1. Flüssigkristallines Medium basierend auf einem Gemisch von polaren Verbindungen mit positiver dielektrischer Anisotropie, **dadurch gekennzeichnet, dass** es eine oder mehrere Verbindungen der Formel I 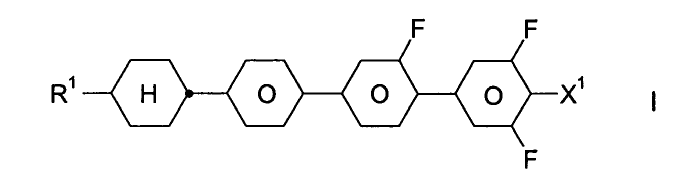 worin
X¹ F, Cl, CHF₂, CF₃, OCHF₂ oder OCF₃ bedeutet und
R¹ Alkyl mit 1 bis 20 C-Atomen bedeutet,
und eine oder mehrere Verbindungen der Gruppe der Formeln IIa, IIb und XVIIa 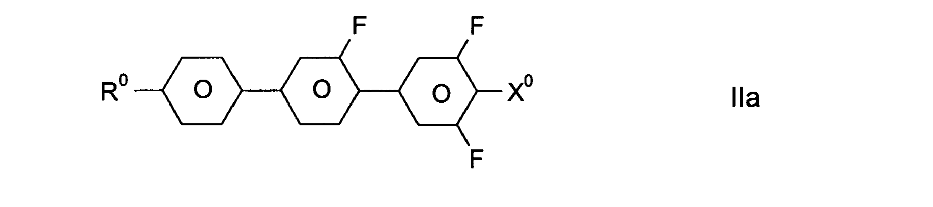 worin
R⁰ Alkyl, Alkoxy, Fluoralkyl, Alkenyl oder Oxaalkenyl mit bis zu 9 C-Atomen bedeutet und
X⁰ F, Cl, CF₃, OCF₃, OCHF₂, Fluoralkyl oder Fluoralkoxy mit bis zu 7 Kohlenstoffatomen bedeutet, 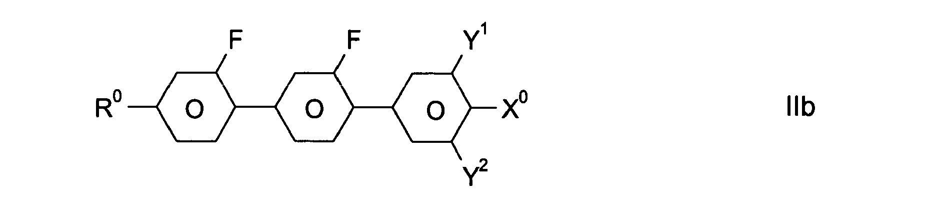
worin
R⁰ Alkyl, Alkoxy, Fluoralkyl, Alkenyl oder Oxaalkenyl mit bis zu 9 C-Atomen bedeutet,
X⁰ F, Cl, CF₃, OCF₃, OCHF₂, Fluoralkyl oder Fluoralkoxy mit bis zu 7 Kohlenstoffatomen bedeutet und
Y¹ und Y² jeweils unabhängig voneinander H oder F bedeuten, 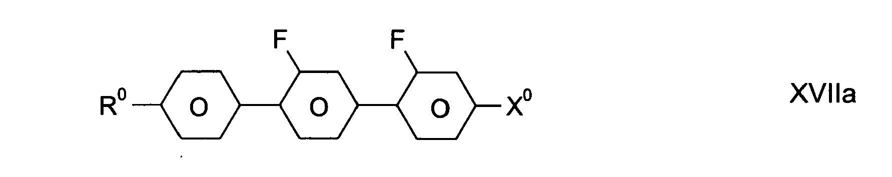
worin
R⁰ Alkyl, Alkoxy, Fluoralkyl, Alkenyl oder Oxaalkenyl mit bis zu 9 C-Atomen bedeutet,
X⁰ F oder Cl bedeutet,
enthält.

2. Medium nach Anspruch 1, **dadurch gekennzeichnet, dass** X¹ OCHF₂ oder OCF₃ bedeutet.

3. Medium nach Anspruch 2, **dadurch gekennzeichnet, dass** X¹ OCF₃ bedeutet.

4. Medium nach einem der Ansprüche 1 bis 3, **dadurch gekennzeichnet, dass** es eine oder mehrere Verbindungen der Formel XVIIa enthält.

5. Medium nach einem der Ansprüche 1 bis 4, **dadurch gekennzeichnet, dass** es zusätzlich eine oder mehrere Verbindungen ausgewählt aus der Gruppe der Verbindungen der Formeln IVa und IXa 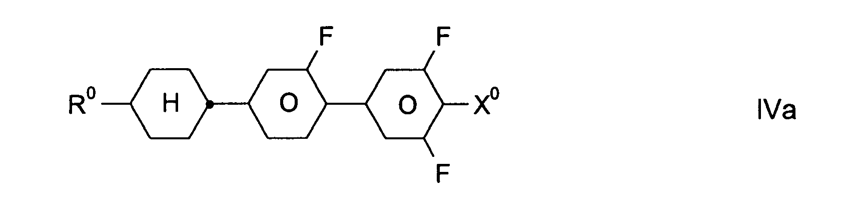 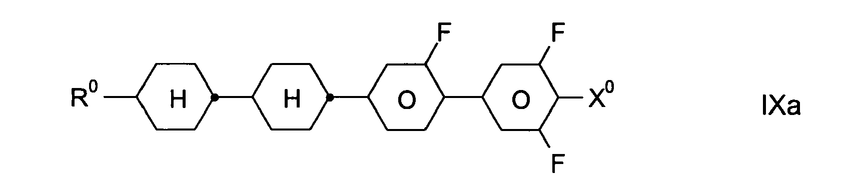 enthält, worin
R⁰ n-Alkyl mit 1 bis 8 C-Atomen oder Alkenyl mit 2 bis 7 C-Atomen bedeutet,
X⁰ F, Cl, CF₃, OCF₃ oder OCHF₂ bedeutet.

6. Medium nach mindestens einem der Ansprüche 1 bis 5, **dadurch gekennzeichnet, dass** es eine optische Anisotropie Δn ≥ 0,16 besitzt.

7. Medium nach einem der Ansprüche 1 bis 6, **dadurch gekennzeichnet, dass** es 3 bis 20 Gew.-% einer oder mehrerer Verbindungen der Formel I enthält.

8. Medium nach einem der Ansprüche 1 bis 7, **dadurch gekennzeichnet, dass** es 10 bis 40 Gew.-% einer oder mehrerer Verbindungen der Formel IIa enthält.

9. Medium nach einem der Ansprüche 1 bis 8, **dadurch gekennzeichnet, dass** es 5 bis 30 Gew.-% einer oder mehrerer Verbindungen der Formel IIb enthält.

10. Cholesterisches flüssigkristallines Medium, **dadurch gekennzeichnet, dass** es als nematische Komponente ein flüssigkristallines Medium nach einem oder mehreren der Ansprüche 1 bis 9 und als optisch aktive Komponente einen oder mehrere chirale Dotierstoffe enthält.

11. Verwendung des flüssigkristallinen Mediums nach mindestens einem der Ansprüche 1 bis 9 in elektrooptischen Flüssigkristallanzeigen.

12. Elektrooptische Flüssigkristallanzeige enthaltend ein flüssigkristallines Medium nach mindestens einem der Ansprüche 1 bis 9.

13. Elektrooptische Flüssigkristallanzeige nach Anspruch 12, **dadurch gekennzeichnet, dass** es sich um eine Aktivmatrixanzeige handelt.

14. Elektrooptische Flüssigkristallanzeige nach mindestens einem der Ansprüche 12 und 13, **dadurch gekennzeichnet, dass** es sich um eine reflektierende Anzeige handelt.

15. Elektrooptische Flüssigkristallanzeige nach mindestens einem der Ansprüche 12 bis 14, **dadurch gekennzeichnet, dass** es sich um eine Anzeige mit Projektions-, LCoS^{™}- oder OCB-Modus handelt.

16. Cholesterische Flüssigkristallanzeige, insbesondere eine SSCT- oder PSCT-Anzeige, enthaltend ein cholesterisches flüssigkristallines Medium nach Anspruch 10.

17. Flüssigkristalline Verbindung der Formel Ib 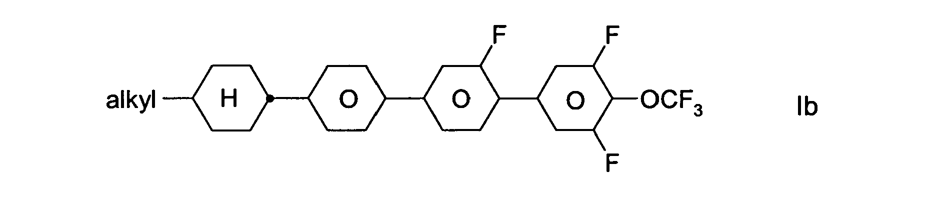 worin
alkyl eine Alkylgruppe mit 1 bis 8 C-Atomen bedeutet.

## Revendications

1. Milieu cristallin liquide basé sur un mélange de composés polaires d'une anisotropie diélectrique positive, **caractérisé en ce qu'**il contient un ou plusieurs composés de la formule I 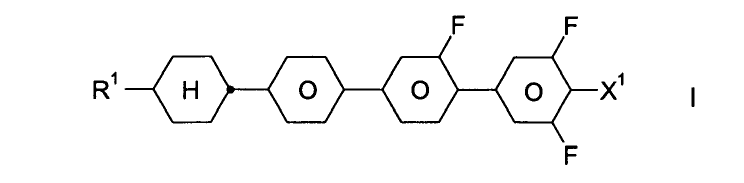 dans laquelle
X¹ est F, CI, CHF₂, CF₃, OCHF₂ ou OCF₃ et
R¹ est alkyle avec 1 à 20 atomes de C
et un ou plusieurs composés du groupe de formules IIa, IIb et XVIIa 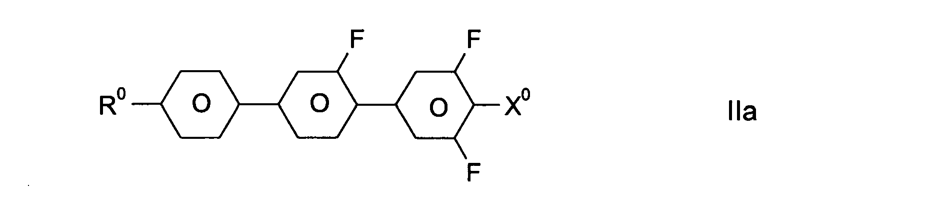 dans laquelle
R⁰ est alkyle, alkoxy, fluoroalkyle, alkényle ou oxaalkényle avec jusqu'à 9 atomes de C et
X⁰ est F, CI, CF₃, OCF₃, OCHF₂, fluoroalkyle ou fluoroalkoxy avec jusqu'à 7 atomes de carbone, 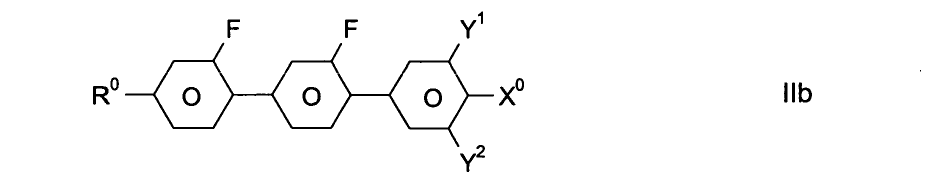
dans laquelle
R⁰ est alkyle, alkoxy, fluoroalkyle, alkényle ou oxa-alkényle avec jusqu'à 9 atomes de C,
X⁰ est F, CI, CF₃, OCF₃, OCHF₂, fluoroalkyle ou fluoroalkoxy avec jusqu'à 7 atomes de carbone, et
Y¹ et Y² sont, chacun indépendamment de l'autre, H ou F, 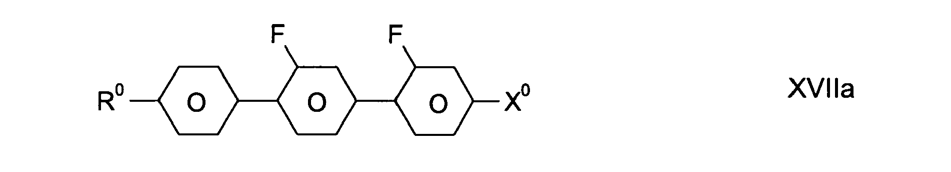
dans laquelle
R⁰ est alkyle, alkoxy, fluoroalkyle, alkényle ou oxa-alkényle avec jusqu'à 9 atomes de C,
X⁰ est F ou CI.

2. Milieu selon la revendication 1, **caractérisé en ce que** X¹ est OCHF₂ ou OCF₃.

3. Milieu selon la revendication 2, **caractérisé en ce que** X¹ est OCF₃.

4. Milieu selon l'une des revendications 1 à 3, **caractérisé en ce qu'**il comprend un ou plusieurs composés de la formule XVIIa.

5. Milieu selon l'une des revendications 1 à 4, **caractérisé en ce qu'**il comprend additionnellement un ou plusieurs composés choisis parmi le groupe de composés des formules IVa et IXa 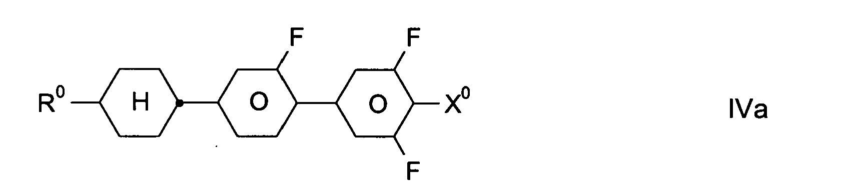 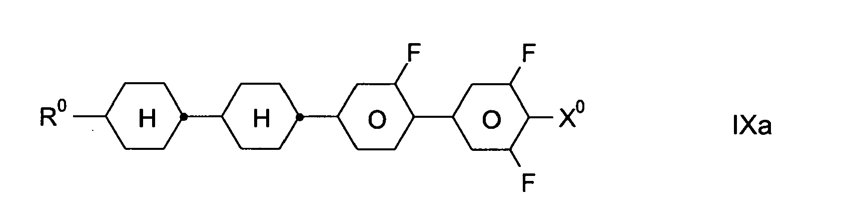 dans lesquelles
R⁰ est n-alkyle avec de 1 à 8 atomes de C ou alkényle avec de 2 à 7 atomes de C, et
X⁰ est F, CI, CF₃, OCF₃ ou OCHF₂.

6. Milieu selon au moins l'une des revendications 1 à 5, **caractérisé en ce qu'**il présente une anisotropie optique Δn ≥ 0,16.

7. Milieu selon l'une des revendications 1 à 6, **caractérisé en ce qu'**il comprend de 3 à 20 % en poids d'un ou de plusieurs composés de la formule I.

8. Milieu selon l'une des revendications 1 à 7, **caractérisé en ce qu'**il comprend de 10 à 40 % en poids d'un ou de plusieurs composés de la formule IIa.

9. Milieu selon l'une des revendications 1 à 8, **caractérisé en ce qu'**il comprend de 5 à 30 % en poids d'un ou de plusieurs composés de la formule IIb.

10. Milieu cristallin liquide cholestérique, **caractérisé en ce qu'**il comprend en tant que composant nématique un milieu cristallin liquide selon une ou plusieurs des revendications 1 à 9 et en tant que composant optiquement actif un ou plusieurs dopants chiraux.

11. Utilisation du milieu cristallin liquide selon au moins l'une des revendications 1 à 9 dans des affichages à cristaux liquides électrooptiques.

12. Affichage à cristaux liquides électrooptique contenant un milieu cristallin liquide selon au moins l'une des revendications 1 à 9.

13. Affichage à cristaux liquides électrooptique selon la revendication 12, **caractérisé en ce qu'**il est un affichage à matrice active.

14. Affichage à cristaux liquides électrooptique selon au moins l'une des revendications 12 et 13, **caractérisé en ce qu'**il est un affichage réfléchissant.

15. Affichage à cristaux liquides électrooptique selon l'une des revendications 12 à 14, **caractérisé en ce qu'**il est un affichage de mode projection, LCoS^{™} ou OCB.

16. Affichage à cristaux liquides cholestériques, en particulier un affichage SSCT ou PSCT, comprenant un milieu cristallin liquide cholestérique selon la revendication 10.

17. Composé cristallin liquide de la formule Ib 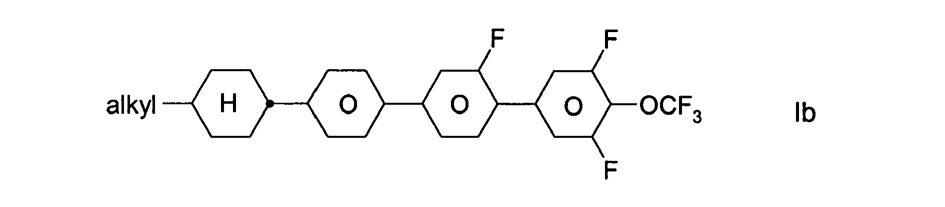 dans laquelle
alkyl est un groupe alkyle avec de 1 à 8 atomes de C.
